# EUROPÄISCHE PATENTSCHRIFT

(11) **EP 3 614 850 B1**
(45) Veröffentlichungstag und Bekanntmachung des Hinweises auf die Patenterteilung: **09.10.2024**
(21) Anmeldenummer: 18723405.9
(22) Anmeldetag: 12.04.2018
(51) Int. Cl.: A23L 3/22, A23C 3/037, F04D 29/58, F04D 29/42

(54) **VERFAHREN UND ANLAGE ZUR STEUERUNG UND/ODER REGELUNG DER BEHANDLUNG HITZEEMPFINDLICHER FLÜSSIGER NAHRUNGSMITTELPRODUKTE**
METHOD AND SYSTEM FOR CONTROLLING AND/OR REGULATING THE TREATMENT OF HEAT-SENSITIVE LIQUID FOOD PRODUCTS
PROCÉDÉ ET INSTALLATION DE COMMANDE ET/OU DE RÉGULATION DU TRAITEMENT DE PRODUITS ALIMENTAIRES LIQUIDES SENSIBLES À LA CHALEUR

(30) Priorität: 29.04.2017 DE 102017004213
(43) Veröffentlichungstag der Anmeldung: 04.03.2020
(73) Patentinhaber: GEA TDS GmbH, 31157 Sarstedt (DE)
(72) Erfinder: SCHWENZOW, Uwe, 48683 Ahaus (DE); TACKE, Ludger, 46342 Velen (DE); ASSING, Hubert, 46683 Ahaus (DE); BUSS, Helmut, 46359 Heiden (DE); LEIWERING, Ludger, 48366 Laer (DE)
(74) Vertreter: Hauck Patentanwaltspartnerschaft mbB
(86) Internationale Anmeldenummer: PCT/EP2018/000198
(87) Internationale Veröffentlichungsnummer: WO 2018/197036

(56) Entgegenhaltungen:
- WO-A1-2016/012026
- US-A1- 2008 160 149
- US-A1- 2010 065 259

## Beschreibung

### TECHNISCHES GEBIET

Die Erfindung betrifft ein Verfahren und eine Anlage zur Steuerung und/oder Regelung der Behandlung hitzeempfindlicher flüssiger Nahrungsmittelprodukte, wie Molkenproteinkonzentrat, Babynahrung, flüssige Babynahrungskonzentrate, nahrhafte Getränke oder Käsereimilch, bei dem Wasserdampf das flüssige Nahrungsmittelprodukt zur Bildung eines keimfreien Zustands in einem Infusorbehälter direkt erhitzt, bei dem dem flüssigen Nahrungsmittelprodukt durch Entspannung auf einen niedrigeren Druck Wasser in einer Menge, die jener des zuvor zugeführten Wasserdampfes entspricht, entzogen wird, bei dem das flüssige Nahrungsmittelprodukt zwischen der Erhitzung und der Entspannung mittels einer Zentrifugalpumpe gefördert wird, bei dem das flüssige Nahrungsmittelprodukt, beginnend mit dem Eintritt in einen Fußbereich des Infusorbehälters und längstens bis in die Zentrifugalpumpe hinein, in wenigstens einem Abschnitt dieses Strömungsweges eine Kühlung durch die jeweils zugeordneten, diesen Strömungsweg berandenden Wandungen erfährt. Weiterhin ist eine Zentrifugalpumpe für eine solche Anlage beschrieben.

Hitzeempfindliche flüssige Nahrungsmittelprodukte der vorgenannten Art enthalten relativ viel Proteine, viel Trockenmasse und wenig Wasser, und sie können eine niedrige, mittlere oder hohe Viskosität besitzen. Der Begriff der Hitzeempfindlichkeit soll im Folgenden so verstanden werden, dass diese Nahrungsmittelprodukte, vorzugsweise bei Temperaturen über 100 °C, zu Anlagerungen bis hin zum Anbrennen, d.h. unter diesen Bedingungen zur Belagbildung an kritischen Wandungen, nämlich den Wandungen des Infusorbehälters, der sie fördernden Zentrifugalpumpe und an den Wandungen des den Infusorbehälter mit der Zentrifugalpumpe verbindenden Strömungsweges, neigen. Diese Belagbildung wird auch als Produkt-Fouling bezeichnet. Das Produkt-Fouling verringert die Standzeit bzw. die Betriebszeit des Infusorbehälters und insbesondere der Zentrifugalpumpe zwischen zwei Reinigungszyklen. Dem Anbrennen des erhitzten flüssigen Nahrungsmittelprodukts an den kritischen Wandungen wird durch eine Kühlung dieser Wandungen entgegengewirkt.

### STAND DER TECHNIK

Besonders kritische Bereiche einer Erhitzungsanlage mit Infusorbehälter und einer dem Infusorbehälter nachgeordneten und wie auch immer ausgestalteten Fördereinrichtung sind der Bodenbereich des Infusorbehälters, der sich nach unten bis in eine Auslassöffnung verjüngt, und die Fördereinrichtung. Bei der Fördereinrichtung kann es sich in an sich bekannter Weise um eine rotierende Verdrängerpumpe wie Zahnrad-, Flügelzellen-, Schraubenrad-, Impeller- oder Drehkolbenpumpe handeln. Die rotierende Verdrängerpumpe ist in der Regel unmittelbar an der Auslassöffnung angeordnet, weil durch den eindeutig drehzahlabhängigen Volumenstrom dieses Pumpentyps eine unproblematische Regelung eines anzustrebenden minimalen Füllstands im Infusorbehälter möglich ist. Aus **der** EP 0 794 706 B1 ist die Anordnung einer Zahnradpumpe bekannt, wobei deren Gehäuse eine Kühlung aufweist und das Gehäuse sich unmittelbar an die Auslassöffnung des Infusorbehälters anschließt. Eine Zahnradpumpe besitzt, bauartbedingt, eine Selbstreinigungsfähigkeit, weil die Zahnräder eng miteinander kämmen und an den zugeordneten Gehäusewandungen entlangschaben und somit eine stetig aufwachsende Belagbildung (Produkt-Fouling) verhindern.

Es wurde aber auch bereits vorgeschlagen, eine als Zentrifugalpumpe ausgebildete Fördereinrichtung einzusetzen, wobei diese in der Regel über ein an der Auslassöffnung ausmündendes und sich nach unten erstreckendes Auslassrohr und somit in einem Abstand vom Infusorbehälter angeordnet ist. Ein diesbezüglicher Abstand, der eine zusätzliche Flüssigkeitsvorlage im Auslassrohr zwischen der Auslassöffnung und dem Eintritt in die Zentrifugalpumpe darstellt, ist notwendig, um eine hinreichend sichere Füllstandsregelung im Infusorbehälter zu realisieren. Ein schwankender Füllstand im Bodenbereich des Infusorbehälters führt dort zu einer unerwünschten und undefinierten Verweilzeit, ein Absinken des Füllstands bis in den Eintritt der Zentrifugalpumpe hinein kann zu einem Dampfeinsaugen in die Zentrifugalpumpe und damit zur unerwünschten Kavitation führen. Undefinierte Verweilzeiten und Kavitation führen zur Qualitätsminderung beim flüssigen Nahrungsmittelprodukt.

In der WO 2016/012026 A1 ist die aus der EP 0 794 706 B1 bekannte Anlage zur Wärmebehandlung hitzeempfindlicher flüssiger Nahrungsmittel dahingehend abgewandelt, dass sich nunmehr, bei ansonsten unveränderter Konfiguration der einzelnen Aggregate der Anlage, der den Boden des Infusorbehälters umgebende Kühlmantel, der der Kühlung dieses Bodens dient, bis hinunter an die Pumpe und, gemäß einer vorteilhaften Ausführungsform, in das Pumpengehäuse hinein erstreckt. Bei der Pumpe handelt es sich um eine Verdrängerpumpe, vorzugsweise um eine Zahnrad- oder Kolbenpumpe. Es wird aber auch eine Zentrifugalpumpe beansprucht, ohne dass angegeben ist, wie diese Zentrifugalpumpe ausgestaltet ist. Es kann daher davon ausgegangen werden, dass hier eine dem Fachmann in ihrem grundsätzlichen Aufbau bekannte, herkömmliche und hydraulisch optimierte Zentrifugalpumpe vorgesehen ist.

Die US 2008/160149 A1 offenbart ein Verfahren zur direkten Erhitzung eines flüssigen Nahrungsmittelprodukts mittels Dampfs. Die Dampfzufuhr in das Nahrungsmittelprodukt erfolgt über einen Dampfinjektor, der Hochdruckdampf aus einem Dampfreservoir direkt in den Saftfluss abgibt. Der eingehende Saftfluss wird über eine in ihrem Durchfluss regelbare Pumpe in bekannter Weise möglichst konstant gehalten. Die Pumpe wird über einen Flussmesser für den Saftfluss und über eine Rückkopplungsschleife in herkömmlicher Weise gesteuert. Die gewünschte Pasteurisierungs-/Sterilisierungstemperatur wird über eine Temperaturüberwachungseinrichtung überwacht, die über eine herkömmliche Rückkopplungsschleife eine Feineinstellung am Dampfinjektor vornimmt.

In der US 2010/065 259 A1 ist eine Vorrichtung zur direkten Erhitzung eines flüssigen Nahrungsmittelprodukts mittels Dampfs beschrieben. Das eingehende Nahrungsmittelprodukt wird über eine in ihrem Durchfluss regelbare Transferpumpe in einem vorgegebenen Bereich gehalten. Die Erhitzung des Produkts auf Endtemperatur erfolgt in einer sog. Dampfmischpumpe. Die vor der Erhitzung mittels Dampfs stattfindende Vorwärmung des Produkts wird in einem Wärmetauscher vorgenommen. Die Regelung der Temperatur des in der Dampfmischpumpe erhitzten Produkts erfolgt in an sich bekannter Weise über eine Sterilisationssteuereinheit, die die Temperatur des erhitzten Produkts stromabwärts des Auslasses der Dampfmischpumpe durch einen Temperatursensor misst und, basierend auf diesem Messwert, die Dampfmenge der Dampfmischpumpe einstellt.

Eine Zentrifugalpumpe für unproblematische flüssige Nahrungsmittelprodukte, wie beispielsweise Wasser, ist in ihrem grundsätzlichen Aufbau hinlänglich bekannt. Sie ist derart ausgestaltet und ausgelegt, dass sie einen möglichst hohen hydraulischen Wirkungsgrad aufweist, d.h. dass sie mit einer bestimmten Antriebsenergie ein möglichst großes Produkt aus Volumenstrom und Förderhöhe erreicht. In einem in der Regel aus mindestens zwei Gehäuseteilen bestehenden Pumpengehäuse ist auf einer Welle ein Laufrad mit Schaufeln angeordnet. Innerhalb des Pumpengehäuses schließt sich an einen ringförmig umlaufenden Laufradaustrittsquerschnitt außenseits ein Leitapparat in Form beispielsweise eines Spiralgehäuses oder eines schaufellose Ringraums an. An dem saugseitigen Gehäuseteil, einem Gehäusedeckel, befindet sich koaxial zur Laufradachse ein Einlass, ausgebildet in der Regel als sogenannter Saugstutzen, und, vorzugsweise umfangsseits tangential ausmündend, ein Auslass, der in der Regel als sogenannter Druckstutzen ausgebildet ist. Mit dem der Saugseite abgewandten Gehäuseteil, einer Gehäuserückwand, bildet eine Laufradrückseite einen sog. hinteren Radseitenraum, der mit Blick auf einen guten hydraulischen Wirkungsgrad der Zentrifugalpumpe in der Regel eine geringe axiale Erstreckung aufweist. Diese axiale oder spaltweite Erstreckung ist gerade so eng bemessen, dass bei angemessenen Fertigungstoleranzen die mechanische Funktionsfähigkeit der Zentrifugalpumpe sichergestellt ist. In gleicher Weise ist die Laufrad-Vorderseite, und hier sind es bei einem offenen Laufrad die vorderen, stirnseitigen Schaufelkanten, mit möglichst engem Spalt an den Verlauf des Gehäusedeckels angepasst. Zur Reduzierung einer Axialkraft, die aus den auf das Laufrad beiderseits wirkenden Druckkräften resultiert, sind im Nabenbereich des Laufrades und über dessen Umfang verteilt mehrere, im Durchmesser relativ kleine Druckausgleichsbohrungen angeordnet.

Bei hitzeempfindlichen flüssigen Nahrungsmittelprodukten der einleitend genannten Art kommt es vorrangig darauf an, dass bei deren Förderung durch eine Zentrifugalpumpe eine möglichst geringe Neigung zu Ablagerungen an den Wandungen der Zentrifugalpumpe besteht. Es hat sich beispielsweise bei der direkten Erhitzung von sehr hitzeempfindlichen flüssigen Nahrungsmittelprodukten in einem Infusorbehälter und anschließender Abförderung des erhitzten flüssigen Nahrungsmittelproduktes aus dem Infusorbehälter mittels einer nachgeschalteten Zentrifugalpumpe üblicher Bauart, d.h. hydraulisch optimierter Bauart, gezeigt, dass sich diese Zentrifugalpumpe in kürzester Zeit, wobei es sich diesbezüglich um Sekunden bis wenige Minuten handelt, durch Produkt-Fouling zugesetzt und damit außer Betrieb gesetzt hat. Besonders kritische Bereiche sind hier der Saugbereich des Laufrades, weil hier nicht gelöste Gase und insbesondere nicht kondensierter Wasserdampf das Produkt-Fouling verstärken, und der enge spaltweite hintere Radseitenraum.

Für die konkrete Ausgestaltung einer Zentrifugalpumpe in einer Anlage zur Behandlung hitzeempfindlicher flüssiger Nahrungsmittelprodukte, in der letzteres eine Direkterhitzung mittels kulinarischen Wasserdampfs erfährt, ist bislang noch keine befriedigende Lösung bekannt.

Bei bekannten Anlagen, bei denen eine Zentrifugalpumpe über ein Auslassrohr an die Auslassöffnung des Infusorbehälters angeschlossen ist, ist eine Füllstandsregelung im Bereich der Auslassöffnung und des Auslassrohres erforderlich, die zur Steuerung und/oder Regelung der Betriebsphase der Anlage herangezogen wird. Es hat sich bei dieser Art der Steuerung und/oder Regelung gezeigt, dass Füllstandsschwankungen im Auslassrohr unvermeidlich auftreten und nicht zu verhindern sind. Durch diese Füllstandsschwankungen kommt es zu Verweilzeitschwankungen im Infusorbehälter und dem sich anschließenden Auslassrohr, die 15 bis 20 % der Verweilzeit des direkt zu erhitzenden flüssigen Nahrungsmittelprodukts in diesem Bereich ausmachen. Ist der Füllstand zu hoch, dann ist die Einwirkungszeit des Wasserdampfes auf das flüssige Nahrungsmittelprodukts bei dessen zwangsläufig reduzierter Fallhöhe zu gering, der angestrebte Produkt-Temperatur-Sollwert wird nicht erreicht und es verbleiben Dampfblaseneinlagerungen im unzureichend erhitzten flüssigen Nahrungsmittelprodukt. Bei einem zu niedrigen Füllstand wird zum einen der Produkt-Temperatur Sollwert überschritten und zum anderen besteht die Gefahr des Dampfeinsaugens in die Zentrifugalpumpe, wodurch es dort zur Kavitation kommen kann, mit schädlichen Folgen für das flüssige Nahrungsmittelprodukt und die Zentrifugalpumpe.

Dampfblaseneinlagerungen durch Füllstands- und damit Verweilzeitschwankungen führen zu einem verstärkten Produkt-Fouling insbesondere an den Schaufeln der Zentrifugalpumpe. Das Produkt-Fouling führt generell zur Verkürzung der Betriebsphase der Anlage.

Die Standzeit ist gleichbedeutend mit der Zeitdauer zwischen zwei Reinigungszyklen der Anlage zur Beseitigung des Produkt-Fouling. Eine Verlängerung der Standzeit ist aber generell nicht nur wegen einer Verlängerung der Betriebsphase aus den vorgenannten Gründen erwünscht, sondern eine Standzeitverlängerung, die aus einem weniger quantitativen Produkt-Fouling in der Zeit resultiert, führt zu einer höheren Produktqualität, weil Eiweiß und Fett im flüssigen Nahrungsmittelprodukt weniger geschädigt bzw. beeinflusst werden.

Einen signifikanten Einfluss auf die Standzeit hat darüber hinaus auch die Kühlung der Zentrifugalpumpe. Wie vorstehend dargelegt findet das Produkt-Fouling hier insbesondere im Saugbereich des Laufrades statt, weil hier nicht gelöste Gase und insbesondere nicht kondensierter Wasserdampf das Produkt-Fouling verstärken, und im engen spaltweiten hinteren Radseitenraum. Eine Kühlung dieser Bereiche führt zu einer Standzeitverlängerung, kann aber das Produkt-Fouling auf den Schaufeln der Zentrifugalpumpe nicht verhindern, sondern das Aufwachsen des Produkt-Foulings nur hemmen. Dieses Produkt-Fouling führt zwangsläufig zu einer Verminderung der Durchsatzleistung der Zentrifugalpumpe, weil sich Durchtrittsquerschnitte verengen und Reibungswiderstände in den wandnahen Bereichen der Strömung größer werden, wodurch die an sich schon problematischen Füllstands- und damit Verweilzeitschwankungen in den in Rede stehenden Teilen der Anlage noch verstärkt werden.

Es ist Aufgabe der vorliegenden Erfindung, ein Verfahren zur Steuerung und/oder Regelung der Behandlung hitzeempfindlicher flüssiger Nahrungsmittelprodukte, eine Anlage zur Durchführung des Verfahrens sowie eine Zentrifugalpumpe für diese Anlage zu schaffen, durch die bei aufwachsendem Produkt-Fouling in der Zentrifugalpumpe eine Verbesserung der Füllstandsregelung im Infusorbehälter und damit eine konstante Verweilzeit des zu erhitzenden flüssigen Nahrungsmittelprodukts erreicht wird.

### ZUSAMMENFASSUNG DER ERFINDUNG

Diese Aufgabe wird durch ein Verfahren mit den Merkmalen des Anspruchs 1 gelöst. Vorteilhafte Ausgestaltungen des erfindungsgemäßen Verfahrens sind Gegenstand der zugeordneten Unteransprüche. Eine Anlage zur Durchführung des Verfahrens ist Gegenstand des nebengeordneten Anspruchs 10. Vorteilhafte Ausführungsformen der erfindungsgemäßen Anlage sind in den zugeordneten Unteransprüchen beschrieben.

Die Erfindung geht verfahrenstechnisch aus von einem Verfahren zur Steuerung und/oder Regelung der Behandlung hitzeempfindlicher flüssiger Nahrungsmittelprodukte, bei dem Wasserdampf das flüssige Nahrungsmittelprodukt zur Bildung eines keimfreien Zustands in einem Infusorbehälter direkt erhitzt, bei dem dem flüssigen Nahrungsmittelprodukt durch Entspannung auf einen niedrigeren Druck Wasser in einer Menge, die jener des zuvor zugeführten Wasserdampfes entspricht, entzogen wird. Bei dem Verfahren wird das flüssige Nahrungsmittelprodukt zwischen der Erhitzung und der Entspannung mittels einer Zentrifugalpumpe gefördert und das flüssige Nahrungsmittelprodukt erfährt, beginnend mit dem Eintritt in einen Fußbereich des Infusorbehälters und längstens bis in die Zentrifugalpumpe hinein, in wenigstens einem Abschnitt dieses Strömungsweges eine Kühlung durch die jeweils zugeordneten, diesen Strömungsweg berandenden Wandungen.

Die der Erfindung zugrundeliegende Aufgabe wird gelöst, wenn bei dem Verfahren der gattungsgemäßen Art im Zuge der an sich bekannten Behandlung des direkt zu erhitzenden flüssigen Nahrungsmittelprodukts zum einen eine Zentrifugalpumpe mit einem in einer Pumpenkammer drehbar aufgenommenen Laufrad eingesetzt wird. Die Zentrifugalpumpe weist einen Einlass, einen Auslass und ein Pumpengehäuse auf, welches von wenigstens einem Gehäusedeckel und einer Gehäuserückwand gebildet und in welchem die in fluidgängiger Verbindung mit dem Einlass und dem Auslass stehende Pumpenkammer ausgebildet ist. Das Laufrad ist zu dem Gehäusedeckel hin offen und zu der Gehäuserückwand hin durch eine Laufradrückseite geschlossen ausgebildet. Die Zentrifugalpumpe weist einen zwischen dem Gehäusedeckel und dem Laufrad vorgesehenen vorderen Laufradspalt und einen zwischen der Gehäuserückwand und dem Laufrad vorgesehenen hinteren Laufradspalt auf. Der vordere Laufradspalt ist gegenüber einem minimalen vorderen Laufradspalt, der die mechanische Funktionsfähigkeit der Zentrifugalpumpe sicherstellt, durch Reduzierung der Breite des Laufrades vergrößert. Der vordere Laufradspalt erfährt an einem äußeren Durchmesser des Laufrades eine maximale Vergrö-ßerung, die bis in den Bereich des Eintritts in die Schaufelkanäle des Laufrades bis auf den minimalen vorderen Laufradspalt abnimmt und die Reduzierung der Breite des Laufrades an dem äußeren Durchmesser des Laufrades 40 bis 50 % der Breite eines hydraulisch optimierten Laufrades beträgt. Die Zentrifugalpumpe ist derart ausgelegt, dass ein Teil des vom Laufrad geförderten Volumenstroms des flüssigen Nahrungsmittelprodukts planmäßigen Spülungen des Laufrades selbst und der an das Laufrad unmittelbar angrenzenden Bereiche der Pumpenkammer dient.

Zum anderen sind erfindungsgemäß folgende Behandlungsschritte (a) bis (e) vorgesehen:
(a) Eine stromabwärts hinter der Zentrifugalpumpe erfasste Produkt-Temperatur eines infusorerhitzten flüssigen Nahrungsmittelprodukts wird durch Wasserdampf mit einer Wasserdampf-Temperatur, der in einen Kopfbereich des Infusorbehälters zugeführt wird, auf einen produktspezifischen und planmäßig zu erzielenden Produkt-Temperatur-Sollwert geregelt. Dabei bewirkt in an sich bekannter Weise ein Abfall der Produkt-Temperatur einen Anstieg und ein Anstieg der Produkt-Temperatur einen Abfall der Wasserdampf-Temperatur.
(b) In einer Anfangsphase der Behandlung des flüssigen Nahrungsmittelprodukts wird die Zentrifugalpumpe mit einer um einen vorbestimmten Betrag unter einer Nenndrehzahl der Zentrifugalpumpe liegenden Anfangsdrehzahl betrieben. Diese Anfangsdrehzahl ist vom flüssigen Nahrungsmittelprodukt und/oder von der Auslegung der Zentrifugalpumpe abhängig, d.h. von der Bemessung der planmäßigen Spülungen bzw. der Spülvolumenströme in der Pumpenkammer und im Laufrad selbst.
(c) Einer Reduzierung des Volumenstromes der Zentrifugalpumpe wird dann durch eine Erhöhung der Anfangsdrehzahl entgegengewirkt, wenn diese Reduzierung gleichzeitig mit einem Temperaturabfall der Produkt-Temperatur einhergeht.
(d) Die Erhöhung der Anfangsdrehzahl erfolgt in Abhängigkeit von einem Temperaturabfall der Produkt-Temperatur und/oder einem Temperaturanstieg der Wasserdampf-Temperatur. Dabei resultiert das jeweilige Maß der Erhöhung der Anfangsdrehzahl aus der regelungstechnischen Notwendigkeit im jeweiligen Anwendungsfall, wenigstens die Produkt-Temperatur konstant zu halten. Die jeweilige Anfangsdrehzahl bestimmt sich in der Regel aus im Vorwege experimentell gewonnenen Erfahrungswerten für das jeweilige flüssige Nahrungsmittelprodukt.
(e) Die Schritte (c) und (d) werden so lange wiederholt durchlaufen, bis sich der planmäßig zu erzielende Produkt-Temperatur-Sollwert (T2(S)) und/oder die zu Anfang der Behandlung zum Erreichen des Produkt-Temperatur-Sollwertes (T2(S)) erforderliche Wasserdampf-Temperatur (T1) wieder stationär einstellen/einstellt.

Der erfinderische Grundgedanke baut auf der Erkenntnis auf, dass Füllstandsänderungen das Ergebnis von Störgrößen sind, von denen das Produkt-Fouling auf den Schaufeln der Zentrifugalpumpe eine wesentliche ist. Dieses Produkt-Fouling vermindert zwangsläufig den Volumenstrom in der Zentrifugalpumpe und führt ohne gegensteuernde Maßnahmen, beispielsweise ohne Erhöhung der Antriebsleistung der Zentrifugalpumpe zwecks Beibehaltung des gewünschten Volumenstromes, zu einer Füllstandserhöhung im Infusorbehälter. Die Aufrechterhaltung eines planmäßigen Volumenstromes unter diesen Bedingungen erfordert eine Drehzahlerhöhung und damit die genannte Erhöhung der Antriebsleistung. Diese zwangsläufige Füllstandserhöhung bildet sich mittelbar über einen Abfall der Produkt-Temperatur und daraus mittelbar folgend über einen Temperaturanstieg im Infusorbehälter ab. Zusammenfassend dargestellt nutzt das erfindungsgemäße Verfahren folgende Wirkzusammenhänge:
- Das auf den Wandungen zwischen einer Auslassöffnung des Infusorbehälters und einem Austritt aus der Zentrifugalpumpe stetig aufwachsende Produkt-Fouling führt zu einer Reduzierung des diesen Bereich durchsetzenden Volumenstroms.
- Das Produkt-Fouling in diesem Bereich führt, wenn die Anlage auf konstanten Volumenstrom gefahren werden soll, durch die notwendige Drehzahlerhöhung zu einem Anstieg der Antriebsleistung oder, wenn die notwendige Drehzahlerhöhung nicht vorgenommen wird, zu einer Verringerung des Volumenstromes.
- Die Reduzierung des Volumenstromes unter diesen Bedingungen führt zu einer Füllstandserhöhung im Infusorbehälter und damit zu einem Temperaturabfall in dem infusorerhitzen flüssigen Nahrungsmittelprodukt, weil der Wasserdampf in der verfügbaren Fall- bzw. Einwirkungszeit seine Enthalpie nicht, wie bisher, an das zu erhitzende flüssige Nahrungsmittelprodukt übertragen kann.
- Aus dem Temperaturabfall im infusorerhitzten flüssigen Nahrungsmittelprodukt folgt, regelungstechnisch bedingt, ein Anstieg der Wasserdampf-Temperatur und damit zwangsläufig ein Temperaturanstieg im Infusorbehälter.

Somit ergibt sich die Möglichkeit, nicht ausschließlich die aufwendig zu erfassende Füllstandsänderung im Infusorbehälter selbst, sondern die wesentlich einfacher zu erfassenden Auswirkungen dieser Füllstandsänderungen zur erfindungsgemäßen Füllstandsregelung und damit zur Steuerung und/oder Regelung der Behandlung hitzeempfindlicher flüssiger Nahrungsmittelprodukte in der in Rede stehenden Anlage allein oder zusätzlich heranzuziehen.

Die Erfindung sieht vor, dass die Erhöhung der Anfangsdrehzahl kontinuierlich durchgeführt wird, wobei nach einem weiteren Vorschlag eine diesbezügliche Erhöhung derart durchgeführt wird, dass der Gradient der kontinuierlichen Erhöhung der Anfangsdrehzahl aus den regelungstechnischen Erfordernissen, d.h. aus den gegebenen Regelanforderungen im jeweiligen konkreten Anwendungsfall, resultiert und in Abhängigkeit von dem Temperaturabfall der Produkt-Temperatur und/oder dem Temperaturanstieg der Wasserdampf-Temperatur und/oder den produktspezifischen Erfordernissen eingestellt wird.

Alternativ zur kontinuierlichen Erhöhung der Anfangsdrehzahl schlägt die Erfindung eine schrittweise Erhöhung vor, wobei die Erhöhung in wenigstens einem diskreten Schritt mit einer Drehzahldifferenz durchgeführt wird, die aus den regelungstechnischen Erfordernissen, d.h. aus den gegebenen Regelanforderungen im jeweiligen konkreten Anwendungsfall, resultiert. Ein weiterer Vorschlag sieht diesbezüglich vor, die Drehzahldifferenz in Abhängigkeit von dem Temperaturabfall der Produkt-Temperatur und/oder dem Temperaturanstieg der Wasserdampf-Temperatur und/oder von produktspezifischen Erfordernissen einzustellen.

Die Erfindung schlägt eine weitere verfahrenstechnische Ausgestaltung vor, nach der die Anfangsdrehzahl und/oder der Produkt-Temperatur-Sollwert in Abhängigkeit von Vorgabeparametern, welche für das flüssige Nahrungsmittelprodukt charakteristisch sind, eingestellt werden bzw. wird, wobei unter den Vorgabeparametern die physikalischen Größen wie Dichte, Viskosität und Temperaturleitfähigkeit des flüssigen Nahrungsmittelprodukts und/oder dessen Zusammensetzung wie Anteil an Fett und Eiweiß verstanden wird. Dadurch ist das vorgeschlagene Verfahren an die speziellen Bedürfnisse des zu erhitzenden flüssigen Nahrungsmittelprodukts anpassbar.

Da das erfindungsgemäße Verfahren nicht losgelöst von den physikalischen Randbedingungen, denen es unterworfen ist, betrieben werden kann, sieht eine andere verfahrenstechnische Ausgestaltung weiterhin vor, dass die Anfangsdrehzahl und/oder der Produkt-Temperatur-Sollwert in Abhängigkeit von den physikalischen Randbedingungen, denen das Verfahren unterworfen ist, eingestellt werden bzw. wird, wobei unter den physikalischen Randbedingungen des Verfahrens prozessbedingte Vorgabeparameter des Verfahrens wie Druck und Temperatur verstanden wird.

Eine andere Ausgestaltung des Verfahrens sieht vor, dass die Anfangsdrehzahl und/oder der Produkt-Temperatur-Sollwert und/oder die Drehzahldifferenz und/oder, alternativ zur Drehzahldifferenz, der Gradient der kontinuierlichen Erhöhung der Anfangsdrehzahl mittels einer vor oder bei Inbetriebnahme des Verfahrens erstellten und hinterlegten Kalibrierfunktion eingestellt werden bzw. wird. Dadurch kann die erfindungsgemäße Steuerung und/oder Regelung der Behandlung des flüssigen Nahrungsmittelprodukts auf gewonnene produktspezifische Erfahrungswerte zeit- und kostensparend gestützt und mit hoher Qualität für das flüssige Nahrungsmittelprodukt betrieben werden.

Das erfindungsgemäße Verfahren kann auch Anwendung finden auf einen Infusorbehälter, bei dem das flüssige Nahrungsmittelprodukt ringförmig zugeführt und innenseits von einem innenseitigen Wasserdampf, der Gegenstand des Hauptanspruchs ist, und außenseits von einem außenseitigen Wasserdampf beaufschlagt wird. In diesem Falle wird die Zufuhr des außenseitigen Wasserdampfs in Abhängigkeit von einem erforderlichen Zufuhrdruck des innenseitigen Wasserdampfs in den Kopfbereich des Infusorbehälters und durch eine Differenzdruckregelung eingestellt.

Eine erfindungsgemäße Anlage zur Steuerung und/oder Regelung der Behandlung hitzeempfindlicher flüssiger Nahrungsmittelprodukte geht in an sich bekannter Weise aus von einem Infusorbehälter, in dessen Kopfraum eine Dampfleitung für einen Wasserdampf und ein Produkt-Einlass einmünden, einer mit dem Infusorbehälter über eine Verbindungsleitung in fluidgängiger Verbindung stehenden Vakuumkammer, einer in der Verbindungsleitung angeordneten Zentrifugalpumpe, einer in einem Behälterboden des Infusorbehälters angeordneten Auslassöffnung und einem sich an die Auslassöffnung anschließenden und in die Zentrifugalpumpe einmündenden Auslassrohr. Zur Kühlung sind ein behälterbodenseitiger Kühlmittelraum und weiterhin ein pumpengehäuseseitiger Kühlmittelraum und/oder ein auslassrohrseitigen Kühlmittelraum vorgesehen.

Die der Erfindung zugrundeliegende Aufgabe wird mit einer Anlage gemäß Anspruch 10 gelöst, die über die gattungsbildenden Merkmale hinaus durch die folgenden erfindungsgemäßen Merkmale gekennzeichnet ist:
- es ist eine Zentrifugalpumpe vorgesehen, die in an sich bekannter Weise ein in einer Pumpenkammer drehbar aufgenommenes Laufrad aufweist. Die Zentrifugalpumpe weist einen Einlass, einen Auslass und ein Pumpengehäuse auf, welches von wenigstens einem Gehäusedeckel und einer Gehäuserückwand gebildet und in welchem die in fluidgängiger Verbindung mit dem Einlass und dem Auslass stehende Pumpenkammer ausgebildet ist. Das Laufrad ist zu dem Gehäusedeckel hin offen und zu der Gehäuserückwand hin durch eine Laufradrückseite geschlossen ausgebildet. Die Zentrifugalpumpe weist einen zwischen dem Gehäusedeckel und dem Laufrad vorgesehenen vorderen Laufradspalt und einen zwischen der Gehäuserückwand und dem Laufrad vorgesehenen hinteren Laufradspalt auf. Der vordere Laufradspalt ist gegenüber einem minimalen vorderen Laufradspalt, der die mechanische Funktionsfähigkeit der Zentrifugalpumpe sicherstellt, durch Reduzierung der Breite des Laufrades vergrößert. Der vordere Laufradspalt erfährt an einem äußeren Durchmesser des Laufrades eine maximale Vergrößerung, die bis in den Bereich des Eintritts in die Schaufelkanäle des Laufrades bis auf den minimalen vorderen Laufradspalt abnimmt und die Reduzierung der Breite des Laufrades an dem äußeren Durchmesser des Laufrades 40 bis 50 % der Breite eines hydraulisch optimierten Laufrades beträgt. Die Zentrifugalpumpe ist derart ausgelegt, dass ein Teil eines vom Laufrad geförderten Volumenstroms des flüssigen Nahrungsmittelprodukts planmäßigen Spülungen des Laufrades selbst und der an das Laufrad unmittelbar angrenzenden Bereiche der Pumpenkammer dient;
- in der Verbindungsleitung ist, stromabwärts unmittelbar hinter der Zentrifugalpumpe, eine zur Regelung einer Produkt-Temperatur eingerichtete Temperaturregelungseinrichtung vorgesehen, die mit einem in der Dampfleitung angeordneten Regelventil zusammenwirkt;
- in der Dampfleitung ist, stromabwärts hinter dem Regelventil, eine Temperaturmesseinrichtung für eine Wasserdampf-Temperatur vorgesehen;
- der Zentrifugalpumpe ist eine Drehzahlregelungseinrichtung zur Regelung einer Drehzahl der Zentrifugalpumpe zugeordnet;
- eine Steuer- und Regeleinrichtung ist vorgesehen, die im Zusammenwirken mit der Temperaturregelungseinrichtung, dem Regelventil, der Temperaturmesseinrichtung und der Drehzahlregelungseinrichtung eine produktspezifische Anfangsdrehzahl der Zentrifugalpumpe und die Wasserdampf-Temperatur einstellt und eine Erhöhung der Anfangsdrehzahl vornimmt.

Die lückenlose Kühlung des erhitzten flüssigen Nahrungsmittelprodukts wird erreicht, wie dies ein diesbezüglicher erster Vorschlag vorsieht, wenn der behälterbodenseitige, der auslassrohrseitige und der pumpengehäuseseitige Kühlmittelraum getrennt voneinander eine Kühlung erfahren. Ein zweiter Vorschlag, der den kühltechnischen Aufwand reduziert, sieht hinsichtlich der Kühlung vor, dass wenigstens zwei Kühlmittelräume miteinander in Reihe geschaltet sind und im Gegenstrom zu einem infusorerhitzten Nahrungsmittelprodukt eine Kühlung erfahren.

Der erfinderische Grundgedanke besteht darin, das Laufrad selbst und seine angrenzenden kritischen Bereiche bis zur unmittelbaren pumpengehäuseseitigen Berandung der Laufradvorderseite und der Laufradrückseite mit dem zu fördernden, infusorerhitzten und damit behandelten flüssigen Nahrungsmittelprodukt zu spülen und damit dort ein Produkt-Fouling zu hemmen, weil im Zuge der erfindungsgemä-ßen Spülung gleichzeitig diese pumpengehäuseseitigen Berandungen in an sich bekannter Weise gekühlt werden bzw. gekühlt werden können.

Das behandelte flüssige Nahrungsmittelprodukt dient somit mit einem Teil seines in dem Laufrad geförderten Volumenstroms planmäßigen Spülungen des Pumpengehäuses und des Laufrades selbst. Dabei übersteigen die Volumenströme der planmäßigen Spülungen die zwangsläufigen Ausgleichsströmungen im Pumpengehäuse, die sich aus einer üblichen hydraulisch optimierten Auslegung der Zentrifugalpumpe ergeben, bis zu einem Mehrfachen. Durch die Kühlung wird die Neigung zum Anbrand von flüssigem Nahrungsmittelprodukt an den Wandungen der Zentrifugalpumpe verringert. Dies geschieht unter einem planmäßigen Verzicht auf einen optimalen hydraulischen Wirkungsgrad. In der Zentrifugalpumpe wird im Laufrad ein Volumenstrom gefördert, der um die Summe aller quasi rezirkulierenden Spülvolumenströme gegenüber dem über den Saugstutzen angesaugten Volumenstrom vergrößert ist. Die im Zuge der planmäßigen Spülungen generierten Spülvolumenströme führen Volumina aus dem Kern der Schaufelkanäle an die gekühlten Wandungen des Pumpengehäuses und von dort wieder in das Laufrad hinein, wobei der Kühleingriff nicht kondensierten Wasserdampf kondensieren lässt und somit die Neigung zum Produkt-Fouling vermindert wird.

Die vorstehend dargelegten Zusammenhänge zeigen auf, dass eine Zentrifugalpumpe, die erfindungsgemäß mit dem von ihr geförderten flüssigen Nahrungsmittelprodukt gespült wird, ein Laufrad besitzt, dessen hydraulische Förderleistung, bezogen auf das Laufrad, höher sein muss als die sich am Druckstutzen im Endergebnis tatsächlich einstellende hydraulische Förderleistung der Zentrifugalpumpe. Wenn zur Realisierung einer gespülten Zentrifugalpumpe der in Rede stehenden Art eine hydraulisch optimierte Zentrifugalpumpe gewählt wird, dann muss deren Nennförderleistung um die vorstehend erwähnte Förderleistungsdifferenz entsprechend höher gewählt werden. Bei gleicher Nennförderleistung wird ein äußerer Laufraddurchmesser der gespülten Zentrifugalpumpe daher größer sein müssen als ein solcher für eine hydraulisch optimierte Zentrifugalpumpe.

Im Bereich des vorderen Laufradspaltes bildet sich eine zweite Spülströmung aus, die sich aus dem Bereich des Auslasses in den Bereich des Einlasses des Laufrades erstreckt. Durch die Vergrößerung des vorderen Laufradspaltes wird die dort auch bei engem Laufradspalt vorliegende Umströmung der Vorderkante der Schaufeln des offenen Laufrades, getrieben durch den Druckunterschied zwischen Druck- und Saugseite der Schaufel, deutlich verstärkt, wodurch eine dritte Spülströmung planmäßig generiert wird.

Jeder Schaufelkanal des Laufrades zwischen zwei benachbarten Schaufeln kann darüber hinaus im Bereich seiner begrenzenden Laufradrückseite über wenigstens eine die Laufradrückseite durchdringende Spülbohrung mit dem hinteren Laufradspalt in fluidgängiger Verbindung stehen. Die Positionierung, formmäßige Ausgestaltung und Bemessung der Spülbohrung sind Merkmale, mit denen eine zugeordnete erste Spülströmung hinsichtlich ihrer radialen Eingriffstiefe, ihrer Ausformung und quantitativen Intensität festgelegt wird. Es ist bei der Anordnung einer Spülbohrung in jedem Schaufelkanal strömungs- und fertigungstechnisch zweckmäßig, wenn alle diese Spülbohrungen auf einem Lochkreis mit entsprechender Teilung angeordnet sind. Es hat sich hinsichtlich der Positionierung der Spülbohrung als vorteilhaft erwiesen, wenn der geometrische Ort für die jeweilige Durchdringungsstelle der Spülbohrung mit der Laufradrückseite, der auch den Lochkreisdurchmesser bestimmt, folgendermaßen bestimmt ist:
- näherungsweise durch die Mitte des Schaufelkanals, bezogen auf den Abstand der Schaufeln an der Durchdringungsstelle, und
- näherungsweise durch die Mitte einer maximalen Stromfadenlänge des Schaufelkanals zwischen dessen Ein- und Austritt.

Bezüglich der Bemessung des hinteren Laufradspaltes hat es sich als zielführend herausgestellt, wenn der Zugang zu einem minimalen hinteren, radial orientierten Laufradspalt, der die mechanische Funktionsfähigkeit der Zentrifugalpumpe sicherstellt und der von dem äußeren Durchmesser des Laufrades seinen Anfang nimmt, durch Reduzierung des äußeren Durchmessers des Laufrades um bis zu 5 mm erweitert ist. Darüber hinaus besteht die erfindungsgemäße Vergrößerung des hinteren Laufradspaltes darin, dass die Laufradrückseite im Bereich zwischen der Spülbohrung und einer Nabe des Laufrades eine ringflächenförmige Ausdrehung erfährt, deren axiale Tiefe bis zu 2 mm beträgt.

Durch die Vergrößerung dieser Laufradspalte wird die Generierung der erwünschten und notwendigen ersten und zweiten Spülströmung erst ermöglicht. Die jeweilige Weite des vorderen und des hinteren Laufradspaltes kann in Abhängigkeit von den spezifischen Eigenschaften des flüssigen Nahrungsmittelprodukts bemessen werden.

Bei der Spülbohrung handelt es sich im allgemeinsten Falle um Durchtrittsöffnungen beliebiger Form, d.h. eine einfach herzustellende Kreisform ist nicht zwingend. Die Spülbohrung ist entweder kreisförmig mit einem Bohrungsdurchmesse ausgeführt oder sie weist eine von der Kreisform abweichende Form mit einem für diese Form maßgeblichen hydraulischen Durchmesser auf. Es hat sich als zielführend erwiesen, wenn der Bohrungsdurchmesser oder der hydraulische Durchmesser 30 bis 50 % und in diesem Bereich vorzugsweise 40 bis 50 % vom Abstand der Schaufeln an der Durchdringungsstelle beträgt.

### KURZBESCHREIBUNG DER ZEICHNUNGEN

Eine eingehendere Darstellung der Erfindung ergibt sich aus der folgenden Beschreibung und den beigefügten Figuren der Zeichnung sowie aus den Ansprüchen. Während die Erfindung in den verschiedensten Ausgestaltungen eines Verfahrens der vorbeschriebenen Art und den verschiedensten Ausführungsformen einer Anlage zur Durchführung des Verfahrens realisiert ist, werden nachfolgend anhand der Zeichnung ein bevorzugtes Ausführungsbeispiel einer erfindungsgemäßen Anlage und ihre erfindungsgemäße Steuerung und Regelung sowie eine Zentrifugalpumpe für eine solche Anlage beschrieben.

Es zeigen
- **Figur 1**: in schematischer Darstellung eine Anlage zur Behandlung hitzeempfindlicher flüssiger Nahrungsmittelprodukte nach dem Stand der Technik;
- **Figur 2**: in schematischer Darstellung einen Ausschnitt aus einer Anlage zur erfindungsgemäßen Steuerung und/oder Regelung der Behandlung hitzeempfindlicher flüssiger Nahrungsmittelprodukte im Bereich eines Infusorbehälters zur direkten Erhitzung des flüssigen Nahrungsmittelproduktes in einer unmittelbaren Verbindung mit einer Zentrifugalpumpe;
- **Figur 3**: ebenfalls in schematischer Darstellung den Ausschnitt aus der Anlage gemäß **Figur 2** mit Angaben zur erfindungsgemäßen Steuerung und/oder Regelung der Behandlung hitzeempfindlicher flüssiger Nahrungsmittelprodukte;
- **Figur 4**: in schematischer Darstellung ein Diagramm, das das Zusammenspiel der jeweiligen Pumpenkennlinie der Zentrifugalpumpe mit der Rohrleitungskennlinie der Anlagen gemäß den **Figuren 3** und **4** im Rahmen der erfindungsgemäßen Steuerung und/oder Regelung zeigt;
- **Figuren 5, 6**: in schematischer Darstellung jeweils ein Diagramm, das die Temperaturverläufe der Produkt- und der Wasserdampf-Temperatur im Rahmen der erfindungsgemäßen Steuerung und/oder Regelung und auf der Grundlage des Kennlinienzusammenspiels gemäß **Figur 4** qualitativ darstellt;
- **Figur 7**: in schematischer Darstellung ein Diagramm, das die Leistungsaufnahme der ersten Fördereinrichtung im Rahmen der erfindungsgemäßen Steuerung und/oder Regelung und auf der Grundlage des Kennlinienzusammenspiels gemäß **Figur 4** qualitativ darstellt;
- **Figur 8**: einen Bildschirmausschnitt aus einem grafischen Messprotokoll für das erfindungsgemäße Verfahren, angewendet auf ein spezielles flüssiges Nahrungsmittelprodukt, und
- **Figur 9**: in der Seitenansicht einen Meridianschnitt durch das Laufrad der Zentrifugalpumpe gemäß **Figur 2** mit der näherungsweisen Andeutung einer ersten, zweiten und dritten Spülströmung.

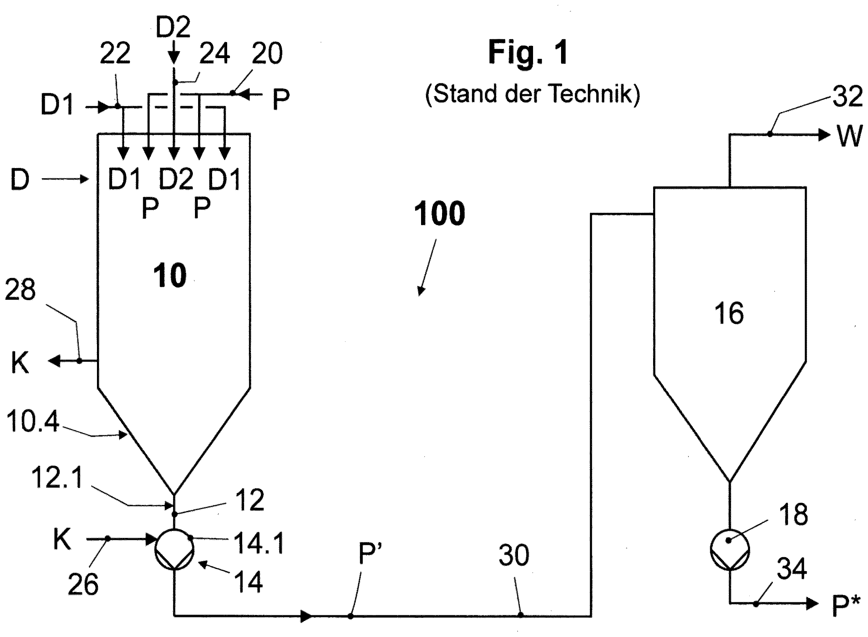

Eine aus dem Stand der Technik bekannte Anlage 100 gemäß **Figur 1** (beispielsweise WO 2016/012026 A1) enthält einen Infusionsbehälter 10, wie er beispielsweise aus der WO 20101086082 A1 beschrieben ist, und der in seinem Kopfraum einen Produkt-Einlass 20 aufweist, über den ein flüssiges Nahrungsmittelprodukt P, das hitzebehandelt werden soll, diesem Infusionsbehälter 10 zentral und kreisringförmig zugeführt wird. Dem derart zugeführten flüssigen Nahrungsmittelprodukt P wird ebenfalls über den Kopfraum des Infusorbehälters 10 Wasserdampf D zur Direkterhitzung zugeführt, und zwar über einen äußeren Wasserdampf-Einlass 22 radial außenseits ein erster Wasserdampf D1 und über einen inneren Wasserdampf-Einlass 24 ein zweiter Wasserdampf D2 radial von innen.

Der Infusorbehälter 10 ist an seinem sich nach unten zu einer Auslassöffnung verjüngenden Boden von einem behälterbodenseitigen Kühlmittelraum 10.4 berandet. Die Auslassöffnung des Infusorbehälters 10 ist über ein Auslassrohr 12, das von einem auslassrohrseitigen Kühlmittelraum 12.1 umgeben ist, mit einer ersten Fördereinrichtung 14 verbunden, die als Verdrängerpumpe, vorzugsweise als rotierende, ausgebildet und in einer von der ersten Fördereinrichtung 14 zu einem Eintritt einer Vakuumkammer 16 führenden Verbindungsleitung 30 angeordnet ist. Die erste Fördereinrichtung 14 besitzt einen pumpengehäuseseitigen Kühlmittelraum 14.1.

Der pumpengehäuseseitige Kühlmittelraum 14.1 erfährt zu seiner Kühlung K über einen pumpenseitigen Kühlmittel-Eintritt 26 eine Zuführung von Kühlmittel, das anschließend den auslassrohrseitigen Kühlmittelraum 12.1 zu dessen Kühlung K durchströmt und schließlich in den behälterbodenseitigen Kühlmittelraum 10.4 zur Kühlung K des Bodens des Infusorbehälters 10 eintritt. Die Abführung des Kühlmittels erfolgt über einen infusorseitigen Kühlmittel-Austritt 28.

Die erste Fördereinrichtung 14 fördert ein infusorerhitztes flüssiges Nahrungsmittelprodukt P' von dem Infusionsbehälter 10 zu der Vakuumkammer 16. Die Vakuumkammer 16 ist dazu ausgebildet, um dem sich durch die Druckabsenkung abkühlenden infusorerhitzten flüssigen Nahrungsmittelprodukt P' jene Menge Wasser W als sog. Brüdendampf zu entziehen, die in Form von Wasserdampf D, im vorliegenden Falle bestehend aus dem ersten Wasserdampf D1 und dem zweiten Wasserdampf D2, dem Infusorbehälter 10 zugeführt wird. Das Wasser W wird über einen vorzugsweise im oberen Bereich der Vakuumkammer 16 angeordneten Brüden-Austritt 32 abgeleitet. Ein derart behandeltes flüssiges Nahrungsmittelprodukt P* verlässt die Vakuumkammer 16 über eine vorzugsweise im unteren Bereich an einem sich verjüngenden Boden angeordnete Abführleitung 34 auf dem Weg über eine zweite Fördereinrichtung 18, die vorzugsweise als Zentrifugalpumpe ausgebildet ist.

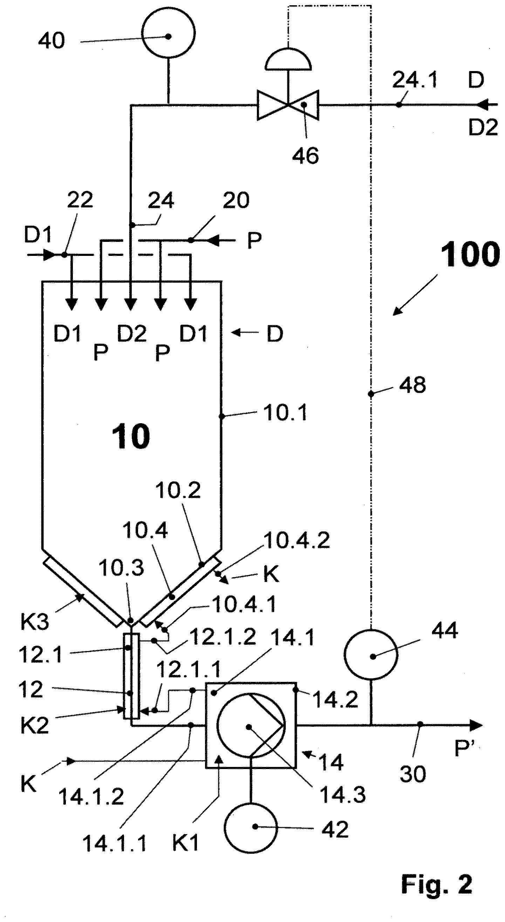

Die **Figur 2** zeigt in schematischer Darstellung einen Ausschnitt aus einer Anlage 100 zur erfindungsgemäßen Steuerung und/oder Regelung der Behandlung hitzeempfindlicher flüssiger Nahrungsmittelprodukte P im Bereich eines Infusorbehälters 10 zur direkten Erhitzung des flüssigen Nahrungsmittelproduktes P. Der beispielhaft ausgewählte Infusorbehälter 10 ist von gleicher Bauart und wird in gleicher Weise mit Wasserdampf D bzw. D1, D2 und flüssigem Nahrungsmittelprodukt P beschickt, wie jener gemäß **Figur 1****.** Er weist einen vorzugsweise zylindrischen Behältermantel 10.1 und einen sich daran anschließenden und nach unten in eine Auslassöffnung 10.3 verjüngenden Behälterboden 10.2 auf, wobei der Behälterboden 10.2 von dem behälterbodenseitigen Kühlmittelraum 10.4 berandet ist. Die Auslassöffnung 10.3 ist über das von dem auslassrohrseitigen Kühlmittelraum 12.1 umschlossenen Auslassrohr 12 mit der als Zentrifugalpumpe ausgebildeten ersten Fördereinrichtung 14 verbunden. In ein Pumpengehäuse 14.2 der Zentrifugalpumpe 14, das ein Laufrad 14.3 drehbar aufnimmt, erstreckt sich der pumpengehäuseseitiger Kühlmittelraum 14.1.

Die Kühlmittelräume 10.4, 12.1 und 14.1 sind vorzugsweise miteinander in Reihe geschaltet und erfahren im Gegenstrom zu einem infusorerhitzten flüssigen Nahrungsmittelprodukt P', das die Zentrifugalpumpe 14 über die Verbindungsleitung 30 verlässt und der Vakuumkammer 16 zuströmt, die Kühlung K. Eine erste Kühlung K1 erfasst den pumpengehäuseseitigen Kühlmittelraum 14.1 auf dem Weg von einem ersten Kühlmittel-Eintritt 14.1.1 zu einem ersten Kühlmittel-Austritt 14.1.2. Eine zweite Kühlung K2 betrifft den auslassrohrseitigen Kühlmittelraum 12.1 auf dem Weg von einem zweiten Kühlmittel-Eintritt 12.1.1 zu einem zweiten Kühlmittel-Austritt 12.1.2. Eine dritte Kühlung K3 umfasst den behälterbodenseitigen Kühlmittelraum 10.4 auf dem Weg von einem dritten Kühlmittel-Eintritt 10.4.1 zu einem dritten Kühlmittel-Austritt 10.4.2.

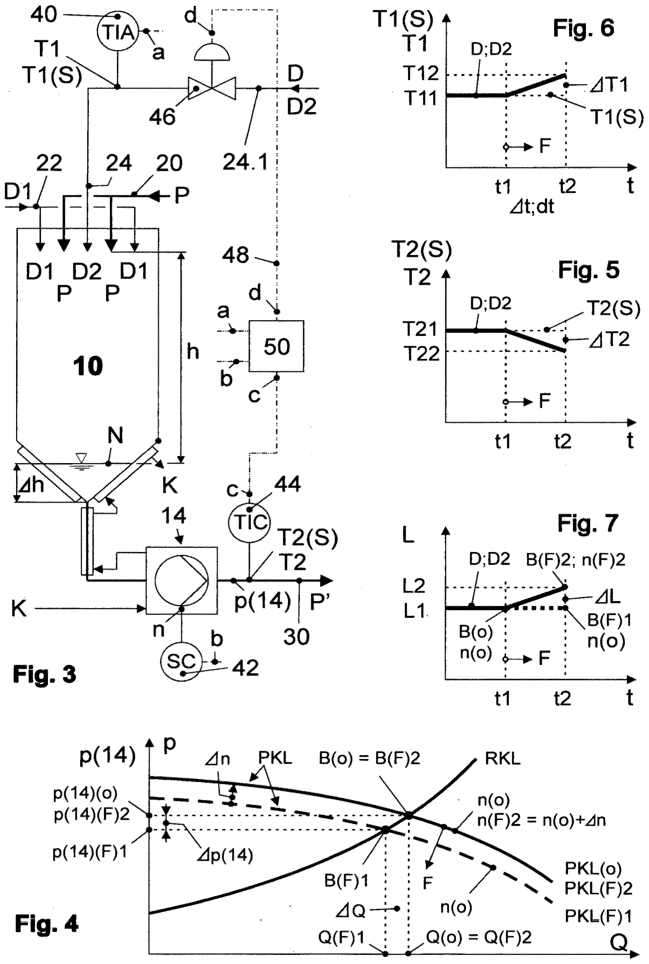

Der innere Wasserdampf-Einlass 24 für die Zufuhr von Wasserdampf D oder innenseitigem Wasserdampf D2 zum Infusorbehälter 10 ist mit einer Dampfleitung 24.1 verbunden. In der Verbindungsleitung 30 ist, stromabwärts unmittelbar hinter der Zentrifugalpumpe 14 (**Figur 3**), eine zur Regelung ("C") einer Produkt-Temperatur T2 oder eines Produkt-Temperatur-Sollwertes T2(S) eingerichtete Temperaturregelungseinrichtung 44 mit der weiteren Fähigkeit, eine Temperatur ("T") anzuzeigen ("I"), vorgesehen (→ TIC), die über eine Steuer- und Regeleinrichtung 50 mit einem in der Dampfleitung 24.1 angeordneten Regelventil 46 zusammenwirkt. In der Dampfleitung 24.1 ist, stromabwärts hinter dem Regelventil 46, eine Temperaturmesseinrichtung 40 für eine Wasserdampf-Temperatur T1 oder einen Wasserdampf-Temperatur-Sollwert T1(S) mit der Fähigkeit, eine Temperatur ("T") anzuzeigen ("I") und eine diesbezügliche Störungsmeldung ("A") auszulösen (→ TIA), vorgesehen. Der Zentrifugalpumpe 14 ist eine Drehzahlregelungseinrichtung 42 zur Regelung ("C") einer Drehzahl n ("S") der Zentrifugalpumpe 14 zugeordnet (→ SC). Die Übertragung von Signalen zur Steuerung und/oder Regelung erfolgt über Signalleitungen, von den eine Signalleitung 48 beispielhaft dargestellt ist.

In dem Infusorbehälter 10 ist ein Flüssigkeitsniveau N eines infusorerhitzten flüssigen Nahrungsmittelprodukts P' beispielhaft eingezeichnet, wobei eine Änderung eines Flüssigkeitsspiegels Δh, die sich auch bis in das Auslassrohr 12 hinein erstrecken kann, durch das erfindungsgemäße Verfahren, möglichst gering gehalten werden soll. Aus der Lage des Flüssigkeitsniveaus N bzw. den Änderungen des Flüssigkeitsspiegels Δh resultiert zwangsläufig eine verfügbare Fallhöhe h für das zu erhitzende flüssige Nahrungsmittelprodukt P, die es erfindungsgemäß möglichst konstant zu halten gilt. Die Zentrifugalpumpe 14 erzeugt an ihrem druckseitigen Austritt in der Verbindungsleitung 30 einen Förderdruck der Zentrifugalpumpe p(14).

Die Steuer- und Regeleinrichtung 50 verfügt über Anschlüsse a, b, c, d, über die sie mit den zugeordneten Anschlüssen a, b, c, d der Temperaturmess- 40, der Drehzahlregelungs- 42 und der Temperaturregelungseinrichtung 44 und dem Regelventil 46 signal- und steuerungstechnisch verbunden ist. Die Steuer- und Regeleinrichtung 50 stellt im Zusammenwirken mit der Temperaturmess-, der Drehzahlregelungs- und der Temperaturregelungseinrichtung 40, 42, 44 und dem Regelventil 46 eine produktspezifische Anfangsdrehzahl n(o) der Zentrifugalpumpe 14 und die Wasserdampf-Temperatur T1 ein und nimmt eine Erhöhung der Drehzahl n, ausgehend von der Anfangsdrehzahl n(o), vor.

Die qualitativen Diagramme der **Figuren 4** bis **7** in Verbindung mit **Figur 3** dienen der Erläuterung des erfindungsgemäßen Verfahrens zur Steuerung und/oder Regelung der Behandlung hitzeempfindlicher flüssiger Nahrungsmittelprodukte P, wobei dieses mit einer beispielhaft ausgeführten erfindungsgemäßen Anlage 100 gemäß **Figur 2** durchführbar ist. Das grundsätzliche Verfahren zur direkten Erhitzung eines flüssigen Nahrungsmittelprodukts P mittels Wasserdampfs wurde einleitend bereits hinreichend beschrieben. Die aufgabengemäße Lösung, nämlich bei einem aufwachsendem Produkt-Fouling F in der Zentrifugalpumpe 14 eine Verbesserung der Füllstandsregelung und damit eine konstante Verweilzeit des zu erhitzenden flüssigen Nahrungsmittelprodukts P zu erreichen, wird nachfolgend beschrieben.

### Betriebsphase

In einer störungsfreien **Betriebsphase** der Anlage 100 (siehe **Figur 3**) wird die stromabwärts hinter der Zentrifugalpumpe 14 erfasste Produkt-Temperatur T2 des infusorerhitzten flüssigen Nahrungsmittelprodukts P' auf den produktspezifischen und planmäßig zu erzielenden Produkt-Temperatur-Sollwert T2(S) geregelt. Dies geschieht durch geregelte Zufuhr von Wasserdampf D bzw. D1, D2 mit der Wasserdampf-Temperatur T1, die in diesem Falle dem Wasserdampf-Temperatur-Sollwert T1(S) entspricht. Die Zufuhr erfolgt in den Kopfbereich des Infusorbehälters 10 mittels der Temperaturregelungseinrichtung 44 im Zusammenwirken mit der Steuer- und Regeleinrichtung 50 und dem Regelventil 46. In an sich bekannter Weise bewirken ein Abfall der Produkt-Temperatur T2 vom Produkt-Temperatur-Sollwert T2(S) einen Anstieg und ein Anstieg der Produkt-Temperatur T2 gegenüber dem Produkt-Temperatur-Sollwert T2(S) einen Abfall der Wasserdampf-Temperatur T1, d.h. ein jeweiliges Abweichen von dem planmäßigen einzustellenden Wasserdampf-Temperatur-Sollwert T1(S).

### Anfangsphase

In einer **Anfangsphase** der Behandlung des flüssigen Nahrungsmittelprodukts P, die unter anderem aus **Figur 4** ersichtlich ist, hat noch kein Produkt-Fouling F stattgefunden. **Figur 4** zeigt in einem Diagramm für einem Volumenstrom Q in Abhängigkeit von einem Förderdruck p zwei Pumpenkennlinien PKL für die Zentrifugalpumpe 14 und eine für die Anlage 100 maßgebliche Rohrleitungskennlinie RKL. In der Anfangsphase wird die Zentrifugalpumpe 14 mit der um einen vorbestimmten Betrag unter einer Nenndrehzahl n(N) der Zentrifugalpumpe 14 liegenden Anfangsdrehzahl n(o) auf ihrer zugeordneten Pumpenkennlinie ohne Produkt-Fouling PKL(o) betrieben. Im Zusammenwirken mit der maßgeblichen Rohrleitungskennlinie RKL stellt sich ein Betriebspunkt ohne Produkt-Fouling B(o) ein. An diesem Betriebspunkt B(o) fördert die Zentrifugalpumpe 14 einen Volumenstrom ohne Produkt-Fouling Q(o) gegen einen Förderdruck der Zentrifugalpumpe ohne Produkt-Fouling p(14)(o).

In dem Diagramm für die Wasserdampf-Temperatur T1 in Abhängigkeit von der Zeit t (**Figur 6**), für die Produkt-Temperatur T2 in Abhängigkeit von der Zeit t (**Figur 5**) und für eine Leistungsaufnahme L in Abhängigkeit von der Zeit t (**Figur 7**) ist die diesbezügliche Anlaufphase jeweils links von einem ersten Zeitpunkt t1, an dem das Produkt-Fouling F beispielhaft beginnen soll, zu verorten. In **Figur 6** ist eine Wasserdampf-Temperatur ohne Produkt-Fouling T11, die dem planmäßig eingestellten Wasserdampf-Temperatur-Sollwert T1(S) entspricht, wirksam. In **Figur 5** ist eine Produkt-Temperatur ohne Produkt-Fouling T21, die dem planmäßig zu erzielenden Produkt-Temperatur-Sollwert T2(S) entspricht, wirksam. In **Figur 7** ist eine Leistungsaufnahme ohne Produkt-Fouling L1 der Zentrifugalpumpe 14, die sich am Betriebspunkt ohne Produkt-Fouling B(o) aus der Anfangsdrehzahl ohne Produkt-Fouling n(o) ergibt, wirksam.

Wenn zum ersten Zeitpunkt t1 Produkt-Fouling F einsetzt, reduziert sich, wie in **Figur 4** dargestellt, der Volumenstrom durch die Zentrifugalpumpe 14 um eine Volumenstromdifferenz ΔQ auf einen Volumenstrom mit Produkt-Fouling Q(F)1 bei einem um eine Förderdruckdifferenz Δp(14) reduzierten Förderdruck der Zentrifugalpumpe mit Produkt-Fouling p(14)(F)1. Es stellt sich auf einer zugeordneten Pumpenkennlinie mit Produkt-Fouling PKL(F)1 bei zunächst unveränderter Anfangsdrehzahl n(o) im Zusammenwirken mit der näherungsweise unveränderten Rohrleitungskennlinie RKL ein erster Betriebspunkt mit Produkt-Fouling B(F)1 ein. Die Reduzierung des Volumenstromes ohne Produkt-Fouling Q(o) um die Volumenstromdifferenz ΔQ auf den Volumenstrom mit Produkt-Fouling Q(F)1 zu einem beispielhaft gewählten zweiten Zeitpunkt t2 führt zu einem Temperaturabfall ΔT2 der Produkt-Temperatur T2, und zwar von der Produkt-Temperatur ohne Produkt-Fouling T21 auf eine Produkt-Temperatur mit Produkt-Fouling T22 (**Figur 5**).

Bei der dargestellten Zeitdifferenz t2-t1 kann es sich um eine endliche Zeitdifferenz Δt, aber auch um ein differenzielles Zeitintervall dt handeln, wobei die Steuerung und/oder Regelung mit einer beliebigen Anzahl aufeinander folgender Zeitintervalle dt durchgeführt wird. Für beide Fälle soll die erfindungsgemäße Steuerung und/oder Regelung eingerichtet sein. Im Kontext zu dem in **Figur 5** dargestellten Temperaturabfall ΔT2 kommt es ab dem ersten Zeitpunkt t1 und bis zu dem zweiten Zeitpunkt t2 zu einem Temperaturanstieg ΔT1 der Wasserdampf-Temperatur T1, und zwar von der Wasserdampf-Temperatur ohne Produkt-Fouling T11 auf eine Wasserdampf-Temperatur mit Produkt-Fouling T12 (**Figur 6**)**.** Ohne erfindungsgemäße gegensteuernde Maßnahmen würden sich die Temperaturverhältnisse der **Figuren 5, 6** manifestieren, sodass in der **Figur 7** der erste Betriebspunkt mit Produkt-Fouling B(F)1 bei unveränderter Anfangsdrehzahl n(o) bei einer unveränderten Leistungsaufnahme mit Produktfouling L1 zu dem zweiten Zeitpunkt t2 zu verorten wäre.

### Regelungsphase

Das erfindungsgemäße Verfahren sieht mit Beginn des Produkt-Foulings F zum ersten Zeitpunkt t1 vor, dass einer Reduzierung des Volumenstromes der Zentrifugalpumpe 14 dann durch eine Erhöhung der Anfangsdrehzahl n(o) entgegengewirkt wird, wenn diese Reduzierung gleichzeitig mit einem Temperaturabfall ΔT2 der Produkt-Temperatur T2 einhergeht. Die Erhöhung der Anfangsdrehzahl n(o) erfolgt in Abhängigkeit von dem Temperaturabfall ΔT2 der Produkt-Temperatur (T2) und/oder dem Temperaturanstieg ΔT1 der Wasserdampf-Temperatur T1. Mit der Erhöhung der Anfangsdrehzahl n(o) in Abhängigkeit von dem Temperaturabfall ΔT2 und/oder dem Temperaturanstieg ΔT1 wird so lange fortgefahren, bis sich der planmäßig zu erzielende Produkt-Temperatur-Sollwert T2(S) und/oder die zu Anfang der Behandlung zum Erreichen des Produkt-Temperatur-Sollwertes T2(S) erforderliche Wasserdampf-Temperatur T1 wieder stationär einstellen/einstellt.

Das Ergebnis der Regelungsphase ist aus den **Figuren 4** und **7** ersichtlich. Die Erhöhung der Anfangsdrehzahl n(o) um eine Drehzahldifferenz Δn führt zu einer Drehzahl mit Produkt-Fouling n(F)2 = n(o) + Δn am zweiten Betriebspunkt mit Produkt-Fouling B(F)2 einer zugeordneten Pumpenkennlinie mit Produkt-Fouling PKL(F)2. An einem zweiten Betriebspunkt mit Produktfouling B(F)2 stellen sich ein Volumenstrom mit Produkt-Fouling Q(F)2 und ein Förderdruck mit Produkt-Fouling p(14)(F)2 ein, wobei Q(F)2 = Q(o) und p(14)(F)2 = p(14)(o) ist (**Figur 4**). Aus **Figur 7** ist ersichtlich, dass in dem in Rede stehenden Zeitraum zwischen dem ersten und dem zweiten Zeitpunkt t1, t2 durch Erhöhung der Anfangsdrehzahl n(o) um die Drehzahldifferenz Δn ein Anstieg der Leistungsaufnahme L der Zentrifugalpumpe 14 um eine Leistungsdifferenz ΔL von der Leistungsaufnahme ohne Produkt-Fouling L1 auf eine Leistungsaufnahme mit Produkt-Fouling L2 (zweiter Betriebspunkt mit Produkt-Fouling B(F)2 bei der Drehzahl mit Produkt-Fouling n(F)2) zu registrieren ist.

Sowohl der zweite Betriebspunkt mit Produkt-Fouling B(F)2 als auch eine zugeordnete Pumpenkennlinie mit Produkt-Fouling PKL(F)2 sind identisch mit dem Betriebspunkt ohne Produkt-Fouling B(o) bzw. der Pumpenkennlinie ohne Produkt-Fouling PKL(o). Dies ist ein zwingendes Ergebnis, weil aufgabengemäß nach erfolgreicher Steuerung und/oder Regelung, wie vorstehend gezeigt, der Volumenstrom Q durch den Infusorbehälter 10 und die angrenzende Zentrifugalpumpe 14, das Flüssigkeitsniveau N und damit die Verweilzeit in dem Infusorbehälter 10 bis in die Zentrifugalpumpe 14 hinein konstant gehalten und Produkt-Temperatur T2 sowie die Wasserdampf-Temperatur T1 auf ihre planmäßigen Sollwerte T2(S) bzw. T1(S) zurückgeführt werden sollen.

Das erfindungsgemäße Verfahren sieht in einer vorteilhaften Ausgestaltung vor, dass die Erhöhung der Anfangsdrehzahl n(o) im Sinne einer zeitnahen Regelung kontinuierlich durchgeführt wird. Hierzu wird weiterhin vorgeschlagen, dass der Gradient der kontinuierlichen Erhöhung der Anfangsdrehzahl n(o) aus den regelungstechnischen Erfordernissen resultiert und in Abhängigkeit von dem Temperaturabfall ΔT2 und/oder dem Temperaturanstieg ΔT1 und/oder auch von den produktspezifischen Erfordernissen eingestellt wird.

Alternativ zu dem vorstehenden Vorschlag sieht eine weitere Ausgestaltung vor, dass die Erhöhung der Anfangsdrehzahl n(o) in wenigstens einem diskreten Schritt mit einer Drehzahldifferenz Δn durchgeführt wird, die aus den regelungstechnischen Erfordernissen resultiert. Diesbezüglich ist weiter vorgesehen, dass die Drehzahldifferenz Δn in Abhängigkeit von dem Temperaturabfall ΔT2 und/oder dem Temperaturanstieg ΔT1 und/oder auch von den produktspezifischen Erfordernissen eingestellt wird.

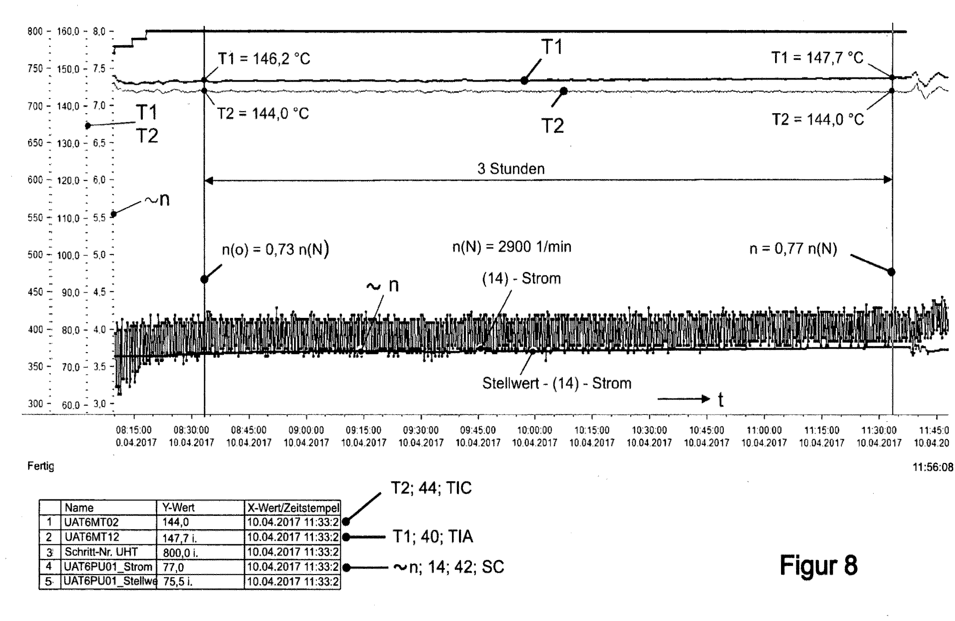

**Figur 8** zeigt einen Bildschirmausschnitt aus einem grafischen Messprotokoll für das erfindungsgemäße Verfahren, angewendet auf die Behandlung von 35.000 Liter Sahne in einem Behandlungszeitraum von ca. 3 Stunden (siehe Zeitachse t, 8.33 bis 11.33 Uhr). Die oberste Linie im Messprotokoll zeigt die Betriebsbereitschaft der Anlage 100, wobei der diesbezügliche treppenförmige Beginn bis ca. 8.20 Uhr die Anlaufphase der Anlage 100 mit Wasser darstellt. Bei der verwendeten Zentrifugalpumpe 14 handelt es sich um eine erfindungsgemäß modifizierte Zentrifugalpumpe mit einer Nennleistung von 15 kW, einer Nenndrehzahl n(N) = 2900 1/min und einem Außendurchmesser des Laufrades, der zwecks Spülung der Pumpenkammer 68 und des Laufrades 14.3 selbst im nachfolgend noch beschriebenen Sinne von 205 mm auf 195 mm abgedreht war.

Die Behandlung der Sahne beginnt mit einer Anfangsdrehzahl n(o) = 2117 1/min, die 73 % der Nenndrehzahl n(N) = 2900 1/min beträgt (= vorbestimmter Betrag unter der Nenndrehzahl n(N) gemäß Schritt (b) des Anspruchs 1). Am Ende der Betriebsphase ist durch die erfindungsgemäße Drehzahlerhöhung die Drehzahl n auf 77 % der Nenndrehzahl angestiegen und beträgt somit n= 2233 1/min. Die Erhöhung der Drehzahl wurde kontinuierlich durchgeführt, wie der Stellwert für den Strom (untere Linie in der Darstellung "Stellwert - (14) - Strom") aufzeigt. Die Stromaufnahme des drehzahlgeregelten Antriebsmotors der Zentrifugalpumpe 14 ist näherungsweise proportional zur Drehzahl n des Antriebsmotors und damit der Zentrifugalpumpe 14. Der breite Balken, gekennzeichnet mit "14 - Strom", stellt die tatsächliche Stromaufnahme des Antriebsmotors dar, wobei die Schwankungsbreite der Stromaufnahme durch die Drehzahlregelung des Antriebsmotors an sich zu erklären ist. Die Drehzahlregelung wird über die Zentrifugalpumpe 14, die zugeordnete Drehzahlregelungseinrichtung 42 (SC) und durch die produktspezifischen Vorgabeparameter, hinterlegt in der Steuer- und Regelungseinrichtung 50, realisiert (**Figur 3**).

Das Diagramm gemäß **Figur 8** zeigt weiterhin deutlich, dass die Forderung, nämlich die Produkt-Temperatur T2 trotz Produkt-Fouling F konstant zu halten, über den gesamten Behandlungszeitraum von 3 Stunden mit T2 = 144 °C sehr gut erfüllt ist. Die daran beteiligten Komponenten sind die Temperaturregelungseinrichtung 44 (TIC), die produktspezifischen Vorgabeparameter, hinterlegt in der Steuer- und Regeleinrichtung 50, und das Regelventil 46 (**Figur 3**).

Das in der erfindungsgemäßen Lösung angelegte und auch in jedem Falle anzustrebende Ziel, die Wasserdampf-Temperatur T1 bei konstanter Produkt-Temperatur T2 und über den gesamten Behandlungszeitraum von 3 Stunden auf den zu Anfang des Behandlungszeitraumes erforderlichen Wert (T1(8.33 Uhr) = 146,2 °C) zurückzuführen bzw. auch am Ende sicherzustellen, ist mit T1(11.33 Uhr) = 147,7 °C und damit mit einer Temperaturdifferenz ΔT1 = 1,5 °C nicht erreicht. Im vorliegenden Falle kann eine erste Erklärung darin gefunden werden, dass, um auf Kundenwunsch das Produkt Sahne zu schonen, die Reduzierung des Volumenstromes der Zentrifugalpumpe 14 durch Produkt-Fouling F nicht vollständig durch die notwendige und mögliche Drehzahlerhöhung überwunden wurde. Eine zweite Erklärung könnte sein, dass durch unerwartet starkes Produkt-Fouling F zwischen der Auslassöffnung 10.3 des Infusorbehälters 10 und dem Austritt aus der Zentrifugalpumpe 14, trotz vollständiger Kompensation einer diesbezüglichen Reduzierung des Volumenstromes Q der Zentrifugalpumpe, die auch in diesem Bereich noch stattfindende Nacherhitzung des infusorerhitzten flüssigen Nahrungsmittelprodukts P' behindert wurde und diese Behinderung nur durch eine um ΔT1 = 1,5 °C höhere Wasserdampf-Temperatur T1 im Rahmen des erfindungsgemäßen Verfahrens dauerhaft zu kompensieren war. Gleichwohl stellt das in **Figur 8** dargestellte Ergebnis, gewonnen unter realen Bedingungen in einem Produktionsbetrieb und unter Berücksichtigung von Kundenforderungen mit Blick auf eine schonende Behandlung seines hitzeempfindlichen flüssigen Nahrungsmittelprodukts P, das erfindungsgemäße Verfahren nicht in Frage, sondern im Gegenteil, es ist eine Bestätigung für die Richtigkeit des erfindungsgemäßen Lösungsansatzes.

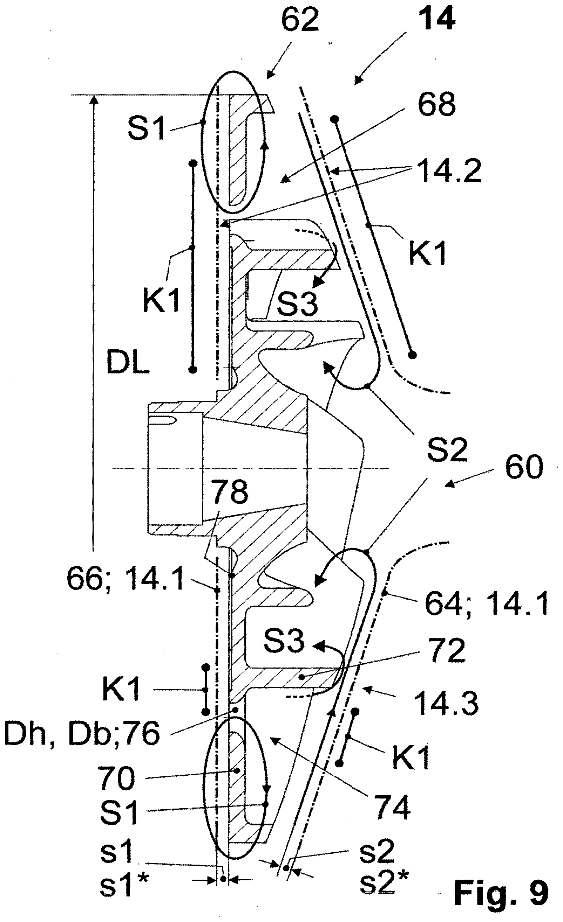

Die in **Figur 9** dargestellte Anordnungslage einer Zentrifugalpumpe 14 weist eine waagerecht orientierte Rotationsachse einer Pumpenwelle auf, In Verbindung mit einem Infusorbehälter 10 ist die Rotationsachse der Pumpenwelle vorzugsweise in Schwerkraftrichtung orientiert, wodurch diese Zentrifugalpumpe 14 mit einem Einlass 60, der als Saugstutzen ausgebildet sein kann, vorteilhaft unmittelbar an das untere Ende des aus der Auslassöffnung 10.3 des Infusorbehälters 10 ausmündenden Auslassrohres 12 angeschlossen werden kann. Die Zentrifugalpumpe 14 eignet sich in besonderer Weise zur Förderung hitzeempfindlicher flüssiger Nahrungsmittelprodukte P, die über den Einlass 60 ein- und aus einem als Druckstutzen ausgebildeten Auslass 62 austreten. Die Zentrifugalpumpe 14 besitzt weiterhin in an sich bekannter Weise das Pumpengehäuse 14.2, welches von wenigstens einem Gehäusedeckel 64 und einer Gehäuserückwand 66 gebildet ist. Im Pumpengehäuse 14.2 ist die in fluidgängiger Verbindung mit dem Einlass 60 und dem Auslass 62 stehende Pumpenkammer 68 ausgebildet, die das Laufrad 14.3 aufnimmt. Das Laufrad 14.3 mit seinen Schaufeln 72 und den durch diese gebildeten Schaufelkanälen 74 ist zum Gehäusedeckel 64 hin offen und zur Gehäuserückwand 66 hin durch eine Laufradrückseite 70 geschlossen ausgebildet. Die Laufradrückseite 70 ist um einen hinteren Laufradspalt s1 von der Gehäuserückwand 66 beabstandet. Auch eine im Wesentlichen durch die Vorderkanten der Schaufeln 72 gebildete Vorderseite des Laufrades 14.3 ist um einen vorderen Laufradspalt s2 von dem Gehäusedeckel 64 beabstandet. Der Einlass 60, der Gehäusedeckel 64 und die Gehäuserückwand 68 können vollständig oder teilweise, beispielsweise in Form des pumpengehäuseseitigen Kühlmittelraumes 14.1, zum Zwecke der ersten Kühlung K1 berandet sein.

Der vordere Laufradspalt s2 ist gegenüber einem minimalen vorderen Laufradspalt s2*, der die mechanische Funktionsfähigkeit der Zentrifugalpumpe 14 sicherstellt, durch Reduzierung der Breite des Laufrades 14.3 vergrößert, und zwar derart, dass er an einem äußeren Durchmesser DL des Laufrades 14.3 eine maximale Vergrö-ßerung erfährt, die bis in den Bereich des Eintritts in die Schaufelkanäle 74 vorzugsweise kontinuierlich bis auf den minimalen vorderen Laufradspalt s2* abnimmt und dass die Reduzierung der Breite des Laufrades 14.3 an dem äußeren Durchmesser DL 40 bis 50 % der Breite eines hydraulisch optimierten Laufrades beträgt.

Jeder Schaufelkanal 74 des Laufrades 14.3 zwischen zwei benachbarten Schaufeln 72 steht im Bereich seiner begrenzenden Laufradrückseite 70 über wenigstens eine die Laufradrückseite 70 durchdringende Spülbohrung 76 mit dem hinteren Laufradspalt s1 in fluidgängiger Verbindung. Der geometrische Ort für die jeweilige Durchdringungsstelle der Spülbohrung 76 mit der Laufradrückseite 70 ist durch die Mitte des Schaufelkanals 74, bezogen auf den Abstand der Schaufeln 72 an der Durchdringungsstelle, und näherungsweise durch die Mitte einer maximalen Stromfadenlänge des Schaufelkanals 74 zwischen dessen Ein- und Austritt bestimmt. Alle Spülbohrungen 76 sind dabei vorzugsweise auf einem einzigen Lochkreis angeordnet.

Eine weitere bevorzugte Ausführungsform sieht vor, dass der Zugang zu einem minimalen hinteren, radial orientierten Laufradspalt s1*, der die mechanische Funktionsfähigkeit der Zentrifugalpumpe 14 sicherstellt und der von dem äußeren Durchmesser DL des Laufrades 14.3 seinen Anfang nimmt, durch Reduzierung des äu-ßeren Durchmessers DL um bis zu 5 mm erweitert ist. Eine notwendige und angestrebte Vergrößerung des hinteren Laufradspaltes s1 besteht darin, dass die Laufradrückseite 70 im Bereich zwischen der Spülbohrung 76 und einer Nabe des Laufrades 14.3 eine ringflächenförmige Ausdrehung 78 erfährt, deren axiale Tiefe bis zu 2 mm beträgt.

Die Spülbohrung 76 ist entweder vorzugsweise kreisförmig mit einem Bohrungsdurchmesse Db ausgeführt oder sie weist alternativ eine von der Kreisform abweichende Form mit einem für diese Form maßgeblichen hydraulischen Durchmesser Dh auf, wobei sich der hydraulische Durchmesser Dh in an sich bekannter Weise als Quotient aus dem vierfachen Durchtrittsquerschnitt der Spülbohrung 76 und dem Umfang der Spülbohrung 76 bemisst. Dabei wird bevorzugt vorgeschlagen, dass der Bohrungsdurchmesser Db oder der hydraulische Durchmesser Dh 30 bis 50 % vom Abstand der Schaufeln 72 an der Durchdringungsstelle der Spülbohrung 76 beträgt.

Schließlich zeigt **Figur 9****,** näherungsweise und schematisch angedeutet, eine erste Spülströmung S1, eine zweite Spülströmung S2 und eine dritte Spülströmung S3 gemäß der Erfindung, die nachstehend noch näher erläutert sind.

Folgende Maßnahmen, mit denen eine Zentrifugalpumpe nach dem Stand der Technik, vorzugsweise eine handelsübliche, erfindungsgemäß zu modifizieren ist, stellen in Kombination miteinander oder jeweils auch für sich allein gesehen die erfindungsgemäße Spülung des Laufrades 14.3 sicher:
- Verbreiterung des hinteren Laufradspaltes s1 und/oder des vorderen Laufradspaltes s2 (siehe **Figur 9**) entweder
   o durch beiderseitiges Abdrehen des Laufrades 14.3
   o oder durch ein in Richtung einer Pumpenwelle axial wirksames Abstandselement, das an der Verbindungsstelle zwischen dem Gehäusedeckel 64 und der Gehäuserückwand 66 angeordnet ist, wobei das Laufrad 14.3 in Bezug zur Gehäuserückwand 66 nicht oder auf oder mit der Pumpenwelle in der Pumpenkammer 68 entsprechend axial versetzt ist.
- Anordnung von vorgenannten Spülbohrungen 76 in der vorstehend beschriebenen Weise.

Durch die Verbreiterung des hinteren Laufradspaltes s1 bzw. durch den erweiterten Zugang zu diesem wird der zugeordnete hintere Radseitenraum mehr oder weniger ungedrosselt mit dem an der Austrittsseite des Laufrades 14.3, das dort den äußeren Laufraddurchmesser DL besitzt, herrschenden statischen Druck über seinen gesamten radialen Erstreckungsbereich beaufschlagt. An der jeweiligen Spülbohrung 76 liegt im Schaufelkanal 74 ein geringerer statischer Druck als im hinteren Radseitenraum an. Dadurch ergibt sich im Schaufelkanal 74 die radial von innen nach außen gerichtete erste Spülströmung S1. Wenn das im hinteren Radseitenraum befindliche behandelte flüssige Nahrungsmittelprodukt P* an der Gehäuserückwand 66 ggf. gekühlt wird, weil dort ggf. die erste Kühlung K1 vorgesehen ist, gelangt nun durch die erste Spülströmung S1 permanent gekühltes behandeltes flüssiges Nahrungsmittelprodukt P* vorzugsweise in den Kernbereich der Strömung im Schaufelkanal 74.

Durch die beschriebene Verbreiterung des vorderen Laufradspaltes s2 kann sich über die jeweilige stirnseitige Vorderkante der Schaufel 72 und über deren axialen Erstreckungsbereich gesehen die dritte Spülströmung S3 ausbilden. Die Triebkräfte für diese dritte Spülströmung S3 resultieren aus dem Druckunterschied an jeder Schaufel 72, der durch den statischen Druck auf der Schaufeloberseite, einer Druckseite, und durch den statischen Druck auf der Schaufelunterseite, einer Saugseite, gegeben ist. Die dritte Spülströmung S3 bewirkt einen Austausch des behandelten flüssigen Nahrungsmittelprodukts P* in den und aus dem Kernbereich der Strömung im zugeordneten Schaufelkanal 74.

Durch den verbreiterten vorderen Laufradspalt s2 kann sich wegen des Unterschiedes des statischen Druckes am Austritt des Laufrades 14.3 und des statischen Druckes im saugseitigen Eintritt des Laufrades 14.3 eine radial orientierte zweite Spülströmung S2 ausbilden, der die dritte Spülströmung S3 quasi quer überlagert ist. Diese zweite Spülströmung S2 sorgt auch hier für einen Austausch des behandelten flüssigen Nahrungsmittelprodukts P* in den und aus dem Kernbereich der Strömung im zugeordneten Schaufelkanal 74.

### BEZUGSZEICHENLISTE DER VERWENDETEN ABKÜRZUNGEN

**Figur 1** **(Stand der Technik)**
   - 100: Anlage

   - 10: Infusorbehälter - (allgemein)
   - 10.4: behälterbodenseitiger Kühlmittelraum

   - 12: Auslassrohr
   - 12.1: auslassrohrseitiger Kühlmittelraum

   - 14: erste Fördereinrichtung
   - 14.1: pumpengehäuseseitiger Kühlmittelraum

   - 16: Vakuumkammer
   - 18: zweite Fördereinrichtung
   - 20: Produkt-Einlass
   - 22: äußerer WasserdampfEinlass
   - 24: innerer Wasserdampf-Einlass
   - 26: pumpenseitiger Kühlmittel-Eintritt
   - 28: infusorseitiger Kühlmittel-Austritt
   - 30: Verbindungsleitung
   - 32: Brüden-Austritt
   - 34: Abführleitung - (für behandeltes Nahrungsmittelprodukt)

   - D: Wasserdampf
   - D1: außenseitiger Wasserdampf
   - D2: innenseitiger Wasserdampf

   - K: Kühlung
   - P: flüssiges Nahrungsmittelprodukt
   - P': infusorerhitztes flüssiges Nahrungsmittelprodukt
   - P*: behandeltes flüssiges Nahrungsmittelprodukt
   - W: Wasser
**Figuren 2** und **3**
   - (10: Infusorbehälter)
   - 10.1: Behältermantel
   - 10.2: Behälterboden
   - 10.3: Auslassöffnung

   - (10.4: behälterbodenseitiger Kühlmittelraum)
   - 10.4.1: dritter Kühlmittel-Eintritt
   - 10.4.2: dritter Kühlmittel-Austritt

   - (12: Auslassrohr)
   - (12.1: auslassrohrseitiger Kühlmittelraum)
   - 12.1.1: zweiter Kühlmittel-Eintritt
   - 12.1.2: zweiter Kühlmittel-Austritt

   - 14: Zentrifugalpumpe
   - (14.1: pumpengehäuseseitiger Kühlmittelraum)
   - 14.1.1: erster Kühlmittel-Eintritt
   - 14.1.2: erster Kühlmittel-Austritt
   - 14.2: Pumpengehäuse
   - 14.3: Laufrad

   - 24.1: Dampfleitung
   - 40: Temperaturmesseinrichtung
   - 42: Drehzahlregelungseinrichtung
   - 44: Temperaturregelungseinrichtung
   - 46: Regelventil - (für Wasserdampf D, D2)
   - 48: Signalleitung

   - 50: Steuer- und Regeleinrichtung

   - K1: erste Kühlung (des Pumpengehäuses 14.2)
   - K2: zweite Kühlung (des Auslassrohres 12)
   - K3: dritte Kühlung (des Behälterbodens 10.2)
   - N: Flüssigkeitsniveau
   - SC: Drehzahlregelung

   - T1: Wasserdampf-Temperatur - (Wasserdampf D, D2)
   - T1(S): Wasserdampf-Temperatur-Sollwert (Wasserdampf D, D2)
   - TIA: Temperaturanzeige und -alarm

   - T2: Produkt-Temperatur (infusorerhitztes Nahrungsmittelprodukt P')
   - T2(S): Produkt-Temperatur-Sollwert
   - TIC: Temperaturanzeige und -regelung

   - a, b, d, d: Anschlüsse (Steuer- und Regeleinrichtung 50 und (40, 42, 44, 46))
   - h: Fallhöhe
   - Δh: Änderung des Flüssigkeitsspiegels
   - p(14): Förderdruck der Zentrifugalpumpe
   - n: Drehzahl (in 1/min bzw. Drehfrequenz in 1/s)
**Figuren 4** bis **8**
   - F: Produkt-Foulings
   - B(o): Betriebspunkt ohne Produkt-Fouling
   - B(F)1: erster Betriebspunkt mit Produkt-Fouling - (bei n(o))
   - B(F)2: zweiter Betriebspunkt mit Produkt-Fouling - (bei n(F)2 = n(o) + Δn)

   - L: Leistungsaufnahme - (Zentrifugalpumpe 14)
   - L1: Leistungsaufnahme ohne Produkt-Fouling - (bei n(o))
   - L2: Leistungsaufnahme mit Produkt-Fouling - (bei n(F)2 = n(o) + Δn)
   - ΔL: Leistungsdifferenz

   - PKL: Pumpenkennlinie, allgemein
   - PKL(o): Pumpenkennlinie ohne Produkt-Fouling - (bei n(o))
   - PKL(F)1: Pumpenkennlinie mit Produkt-Fouling - (bei n(o))
   - PKL(F)2: Pumpenkennlinie mit Produkt-Fouling - (bei n(F)2 = n(o) + Δn)
   - Q: Volumenstrom - (allgemein)
   - Q(o): Volumenstrom ohne Produkt-Fouling - (bei n(o))
   - Q(F)1: Volumenstrom mit Produkt-Fouling - (bei n(o))
   - Q(F)2: Volumenstrom mit Produkt-Fouling - (bei n(F)2 = n(o) + Δn)
   - ΔQ: Volumenstromdifferenz

   - RKL: Rohrleitungskennlinie

   - T11: Wasserdampf-Temperatur ohne Produkt-Fouling ( = T1(S))
   - T12: Wasserdampf-Temperatur mit Produkt-Fouling
   - ΔT1: Temperaturanstieg - (durch Produkt-Fouling)

   - T21: Produkt-Temperatur ohne Produkt-Fouling ( = T2(S))
   - T22: Produkt-Temperatur mit Produkt-Fouling
   - ΔT2: Temperaturabfall - (durch Produkt-Fouling)

   - n(o): Anfangsdrehzahl (ohne Produkt-Fouling)
   - n(F)2: Drehzahl mit Produkt-Fouling am zweiten Betriebspunkt - (an B(F)2)
   - n(N): Nenndrehzahl - (der Zentrifugalpumpe 14 am Auslegungspunkt)
   - Δn: Drehzahldifferenz (bzw. Drehfrequenzdifferenz)

   - p: Förderdruck (allgemein)
   - p(14)(o): Förderdruck der Zentrifugalpumpe ohne Produkt-Fouling (an B(o))
   - p(14)(F)1: Förderdruck der Zentrifugalpumpe mit Produkt-Fouling (an B(F)1)
   - p(14)(F)2: Förderdruck der Zentrifugalpumpe mit Produkt-Fouling (an B(F)2)
   - Δp(14): Förderdruckdifferenz

   - t: Zeit - (allgemein)
   - t1: erster Zeitpunkt - (Beginn Produkt-Fouling)
   - t2: zweiter Zeitpunkt - (aufgewachsenes Produkt-Fouling)
   - Δt: endliche Zeitdifferenz
   - dt: differenzielle Zeitdifferenz
**Figur 9**
   - (14: Zentrifugalpumpe)
   - (14.1: pumpengehäuseseitiger Kühlmittelraum)
   - (14.2: Pumpengehäuse)
   - (14.3: Laufrad)

   - 60: Einlass (Saugstutzen)
   - 62: Auslass (Druckstutzen)
   - 64: Gehäusedeckel
   - 66: Gehäuserückwand
   - 68: Pumpenkammer
   - 70: Laufradrückseite
   - 72: Schaufel
   - 74: Schaufelkanal
   - 76: Spülbohrung
   - 78: ringflächenförmige Ausdrehung

   - DL: äußerer Laufraddurchmesser
   - Db: Bohrungsdurchmesser
   - Dh: hydraulischer Durchmesser

   - (K1: erste Kühlung (des Pumpengehäuses 14.2))

   - S1: erste Spülströmung
   - S2: zweite Spülströmung
   - S3: dritte Spülströmung

   - s1: hinterer Laufradspalt
   - s1*: minimaler hinterer Laufradspalt
   - s2: vorderer Laufradspalt
   - s2*: minimaler vorderer Laufradspalt

Die Erfindung betrifft ein Verfahren zur Steuerung und/oder Behandlung hitzeempfindlicher flüssiger Nahrungsmittelprodukte (P) nach Anspruchs 1 sowie eine Anlage zur Durchführung des Verfahrens, die sicherstellen, dass bei aufwachsendem Produkt-Fouling in der Zentrifugalpumpe eine Verbesserung der Füllstandsregelung im Infusorbehälter und damit eine konstante Verweilzeit des zu erhitzenden flüssigen Nahrungsmittelprodukts erreicht wird. Diese Aufgabe wird verfahrenstechnisch unter anderem dadurch gelöst,
- dass einer Reduzierung des Volumenstromes der Zentrifugalpumpe (14) dann durch eine Erhöhung der Anfangsdrehzahl (n(o)) entgegengewirkt wird, wenn diese Reduzierung gleichzeitig mit einem Temperaturabfall (ΔT2) der Produkt-Temperatur (T2) einhergeht und
- dass die Erhöhung der Anfangsdrehzahl (n(o)) in Abhängigkeit von einem Temperaturabfall (ΔT2) der Produkt-Temperatur (T2) und/oder einem Temperaturanstieg (ΔT1) der Wasserdampf-Temperatur (T1) erfolgt, wobei das jeweilige Maß der Erhöhung der Anfangsdrehzahl (n(o)) aus der regelungstechnischen Notwendigkeit resultiert, wenigstens die Produkt-Temperatur (T2) konstant zu halten

## Patentansprüche

1. Verfahren zur Steuerung und/oder Regelung der Behandlung hitzeempfindlicher flüssiger Nahrungsmittelprodukte (P),
bei dem Wasserdampf (D; D1, D2) das flüssige Nahrungsmittelprodukt (P) zur Bildung eines keimfreien Zustands in einem Infusorbehälter (10) direkt erhitzt, bei dem dem flüssigen Nahrungsmittelprodukt (P) durch Entspannung auf einen niedrigeren Druck Wasser (W) in einer Menge, die jener des zuvor zugeführten Wasserdampfes (D; D1, D2) entspricht, entzogen wird,
bei dem das flüssige Nahrungsmittelprodukt (P) zwischen der Erhitzung und der Entspannung mittels einer Zentrifugalpumpe (14) gefördert wird,
bei dem das flüssige Nahrungsmittelprodukt (P), beginnend mit dem Eintritt in einen Fußbereich des Infusorbehälters (10) und längstens bis in die Zentrifugalpumpe (14) hinein, in wenigstens einem Abschnitt dieses Strömungsweges eine Kühlung (K) durch die jeweils zugeordneten, diesen Strömungsweg berandenden Wandungen erfährt,
bei dem die Zentrifugalpumpe (14) einen Einlass (60), einen Auslass (62) und ein Pumpengehäuse (14.2) aufweist, welches von wenigstens einem Gehäusedeckel (64) und einer Gehäuserückwand (66) gebildet und in welchem eine in fluidgängiger Verbindung mit dem Einlass (60) und dem Auslass (62) stehende Pumpenkammer (68) ausgebildet ist,
bei dem die Zentrifugalpumpe (14) ein in der Pumpenkammer (68) drehbar aufgenommenes Laufrad (14.3) aufweist,
das zum Gehäusedeckel (64) hin offen und zur Gehäuserückwand (66) hin durch eine Laufradrückseite (70) geschlossen ausgebildet ist, wobei die Zentrifugalpumpe (14) derart ausgelegt ist, dass ein Teil eines vom Laufrad (14.3) geförderten Volumenstroms des flüssigen Nahrungsmittelprodukts (P) planmäßigen Spülungen des Laufrades (14.3) selbst und der an das Laufrad (14.3) unmittelbar angrenzenden Bereiche der Pumpenkammer (68) dient,
bei dem die Zentrifugalpumpe (14) einen zwischen dem Gehäusedeckel (64) und dem Laufrad (14.3) vorgesehenen vorderen Laufradspalt (s2) und einen zwischen der Gehäuserückwand (66) und dem Laufrad (14.3) vorgesehenen hinteren Laufradspalt (s1) aufweist,
der vordere Laufradspalt (s2) gegenüber einem minimalen vorderen Laufradspalt (s2*), der die mechanische Funktionsfähigkeit der Zentrifugalpumpe (14) sicherstellt, durch Reduzierung der Breite des Laufrades (14.3) vergrößert ist, der vordere Laufradspalt (s2) an einem äußeren Durchmesser (DL) des Laufrades (14.3) eine maximale Vergrößerung erfährt, die bis in den Bereich des Eintritts in die Schaufelkanäle (74) des Laufrades (14.3) bis auf den minimalen vorderen Laufradspalt (s2*) abnimmt und
die Reduzierung der Breite des Laufrades (14.3) an dem äußeren Durchmesser (DL) des Laufrades (14.3) 40 bis 50 % der Breite eines hydraulisch optimierten Laufrades beträgt,
und bei dem folgende Schritte (a) bis (e) vorgesehen sind:
(a) eine stromabwärts hinter der Zentrifugalpumpe (14) erfasste Produkt-Temperatur (T2) eines infusorerhitzten flüssigen Nahrungsmittelprodukts (P') wird durch Zufuhr von Wasserdampf (D; D1, D2) mit einer Wasserdampf-Temperatur (T1) in einen Kopfbereich des Infusorbehälters (10) auf einen produktspezifischen und planmäßig zu erzielenden Produkt-Temperatur-Sollwert (T2(S)) geregelt, wobei ein Abfall der Produkt-Temperatur (T2) einen Anstieg und ein Anstieg der Produkt-Temperatur (T2) einen Abfall der Wasserdampf-Temperatur (T1) bewirkt;
(b) in einer Anfangsphase der Behandlung des flüssigen Nahrungsmittelprodukts (P) wird die Zentrifugalpumpe (14) mit einer um einen vorbestimmten Betrag unter einer Nenndrehzahl (n(N)) der Zentrifugalpumpe (14) liegenden Anfangsdrehzahl (n(o)) betrieben, wobei die Anfangsdrehzahl (n(o)) vom flüssigen Nahrungsmittelprodukt (P) und/oder von der Auslegung der Zentrifugalpumpe (14) abhängig ist;
(c) einer Reduzierung des Volumenstromes der Zentrifugalpumpe (14) wird dann durch eine Erhöhung der Anfangsdrehzahl (n(o)) entgegengewirkt, wenn diese Reduzierung gleichzeitig mit einem Temperaturabfall (ΔT2) der Produkt-Temperatur (T2) einhergeht;
(d) die Erhöhung der Anfangsdrehzahl (n(o)) erfolgt in Abhängigkeit von dem Temperaturabfall (ΔT2) der Produkt-Temperatur (T2) und/oder einem Temperaturanstieg (ΔT1) der Wasserdampf-Temperatur (T1), wobei das jeweilige Maß der Erhöhung der Anfangsdrehzahl (n(o)) aus der regelungstechnischen Notwendigkeit resultiert, wenigstens die Produkt-Temperatur (T2) konstant zu halten;
(e) die Schritte (c) und (d) werden so lange wiederholt durchlaufen, bis sich der planmäßig zu erzielende Produkt-Temperatur-Sollwert (T2(S)) und/oder die zu Anfang der Behandlung zum Erreichen des Produkt-Temperatur-Sollwertes (T2(S)) erforderliche Wasserdampf-Temperatur (T1) wieder stationär einstellen/einstellt.

2. Verfahren nach Anspruch 1,
**dadurch gekennzeichnet,**
**dass** die Erhöhung der Anfangsdrehzahl (n(o)) kontinuierlich durchgeführt wird.

3. Verfahren nach Anspruch 2,
**dadurch gekennzeichnet,**
**dass** der Gradient der kontinuierlichen Erhöhung der Anfangsdrehzahl (n(o)) aus den regelungstechnischen Erfordernissen resultiert und in Abhängigkeit von dem Temperaturabfall (ΔT2) und/oder dem Temperaturanstieg (ΔT1) und/oder von den produktspezifischen Erfordernissen eingestellt wird.

4. Verfahren nach Anspruch 1,
**dadurch gekennzeichnet,**
**dass** die Erhöhung der Anfangsdrehzahl (n(o)) in wenigstens einem diskreten Schritt mit einer Drehzahldifferenz (Δn) durchgeführt wird, die aus den regelungstechnischen Erfordernissen resultiert.

5. Verfahren nach Anspruch 4,
**dadurch gekennzeichnet,**
**dass** die Drehzahldifferenz (Δn) in Abhängigkeit von dem Temperaturabfall (ΔT2) und/oder dem Temperaturanstieg (ΔT1) und/oder von den produktspezifischen Erfordernissen eingestellt wird.

6. Verfahren nach einem der vorhergehenden Ansprüche,
**dadurch gekennzeichnet,**
**dass** die Anfangsdrehzahl (n(o)) und/oder der Produkt-Temperatur-Sollwert (T2(S)) in Abhängigkeit von Vorgabeparametern, welche für das flüssige Nahrungsmittelprodukt (P) charakteristisch sind, eingestellt werden/wird, wobei unter den Vorgabeparametern die physikalischen Größen wie Dichte, Viskosität und Temperaturleitfähigkeit des flüssigen Nahrungsmittelprodukts (P) und/oder dessen Zusammensetzung wie Anteil an Fett und Eiweiß verstanden wird.

7. Verfahren nach einem der vorhergehenden Ansprüche,
**dadurch gekennzeichnet,**
**dass** die Anfangsdrehzahl (n(o)) und/oder der Produkt-Temperatur-Sollwert (T2(S)) in Abhängigkeit von den physikalischen Randbedingungen, denen das Verfahren unterworfen ist, eingestellt werden/wird, wobei unter den physikalischen Randbedingungen des Verfahrens prozessbedingte Vorgabeparameter des Verfahrens wie Druck und Temperatur verstanden wird.

8. Verfahren nach einem der Ansprüche 2 bis 7,
**dadurch gekennzeichnet,**
**dass** die Anfangsdrehzahl (n(o)) und/oder der Produkt-Temperatur-Sollwert (T2(S)) und/oder die Drehzahldifferenz (Δn) und/oder, alternativ zur Drehzahldifferenz (Δn), der Gradient der kontinuierlichen Erhöhung der Anfangsdrehzahl (n(o)) mittels einer vor oder bei Inbetriebnahme des Verfahrens erstellten und hinterlegten Kalibrierfunktion eingestellt werden/wird.

9. Verfahren nach einem der vorhergehenden Ansprüche,
**dadurch gekennzeichnet,**
**dass** das flüssige Nahrungsmittelprodukt (P) ringförmig zugeführt und innenseits von einem innenseitigen Wasserdampf (D2) und außenseits von einem außenseitigen Wasserdampf (D1) beaufschlagt wird und
**dass** die Zufuhr des außenseitigen Wasserdampfs (D1) in Abhängigkeit von einem erforderlichen Zufuhrdruck des innenseitigen Wasserdampfs (D2) in den Kopfbereich des Infusorbehälters (10) und durch eine Differenzdruckregelung eingestellt wird.

10. Anlage (100) zur Steuerung und/oder Regelung der Behandlung hitzeempfindlicher flüssiger Nahrungsmittelprodukte (P), mit einem Infusorbehälter (10), in dessen Kopfraum eine Dampfleitung (24.1) für einen Wasserdampf (D; D2) und ein Produkt-Einlass (20) einmünden, mit einer mit dem Infusorbehälter (10) über eine Verbindungsleitung (30) in fluidgängiger Verbindung stehenden Vakuumkammer (16), mit einer in der Verbindungsleitung (30) angeordneten Zentrifugalpumpe (14), mit einer in einem Behälterboden (10.2) des Infusorbehälters (10) angeordneten Auslassöffnung (10.3), mit einem sich an die Auslassöffnung (10.3) anschließenden und in die Zentrifugalpumpe (14) einmündenden Auslassrohr (12),
• mit einem behälterbodenseitigen Kühlmittelraum (10.4) und weiterhin
• mit einem pumpengehäuseseitigen Kühlmittelraum (14.1)
• und/oder mit einem auslassrohrseitigen Kühlmittelraum (12.1),
**dadurch gekennzeichnet,**
• **dass** die Zentrifugalpumpe (14) einen Einlass (60), einen Auslass (62) und ein Pumpengehäuse (14.2) aufweist, welches von wenigstens einem Gehäusedeckel (64) und einer Gehäuserückwand (66) gebildet und in welchem eine in fluidgängiger Verbindung mit dem Einlass (60) und dem Auslass (62) stehende Pumpenkammer (68) ausgebildet ist,
• **dass** die Zentrifugalpumpe (14) ein in der Pumpenkammer (68) drehbar aufgenommenes Laufrad (14.3) aufweist, das zum Gehäusedeckel (64) hin offen und zur Gehäuserückwand (66) hin durch eine Laufradrückseite (70) geschlossen ausgebildet ist, wobei die Zentrifugalpumpe (14) derart ausgelegt ist, dass ein Teil eines vom Laufrad (14.3) geförderten Volumenstroms des flüssigen Nahrungsmittelprodukts (P) planmäßigen Spülungen des Laufrades (14.3) selbst und der an das Laufrad (14.3) unmittelbar angrenzenden Bereiche der Pumpenkammer (68) dient,
• **dass** die Zentrifugalpumpe (14) einen zwischen dem Gehäusedeckel (64) und dem Laufrad (14.3) vorgesehenen vorderen Laufradspalt (s2) und einen zwischen der Gehäuserückwand (66) und dem Laufrad (14.3) vorgesehenen hinteren Laufradspalt (s1) aufweist,
der vordere Laufradspalt (s2) gegenüber einem minimalen vorderen Laufradspalt (s2*), der die mechanische Funktionsfähigkeit der Zentrifugalpumpe (14) sicherstellt, durch Reduzierung der Breite des Laufrades (14.3) vergrößert ist,
• **dass** der vordere Laufradspalt (s2) an einem äußeren Durchmesser (DL) des Laufrades (14.3) eine maximale Vergrößerung erfährt, die bis in den Bereich des Eintritts in die Schaufelkanäle (74) des Laufrades (14.3) bis auf den minimalen vorderen Laufradspalt (s2*) abnimmt und
• **dass** die Reduzierung der Breite des Laufrades (14.3) an dem äußeren Durchmesser (DL) des Laufrades (14.3) 40 bis 50 % der Breite eines hydraulisch optimierten Laufrades beträgt,
• **dass** in der Verbindungsleitung (30), stromabwärts unmittelbar hinter der Zentrifugalpumpe (14), eine zur Regelung einer Produkt-Temperatur (T2) eingerichtete Temperaturregelungseinrichtung (44) vorgesehen ist, die mit einem in der Dampfleitung (24.1) angeordneten Regelventil (46) zusammenwirkt,
• **dass** in der Dampfleitung (24.1), stromabwärts hinter dem Regelventil (46), eine Temperaturmesseinrichtung (40) für eine Wasserdampf-Temperatur (T1) vorgesehen ist,
• **dass** der Zentrifugalpumpe (14) eine Drehzahlregelungseinrichtung (42) zur Regelung einer Drehzahl (n) der Zentrifugalpumpe (14) zugeordnet ist
• und **dass** eine Steuer- und Regeleinrichtung (50) vorgesehen ist, die im Zusammenwirken mit der Temperaturregelungseinrichtung (44), dem Regelventil (46), der Temperaturmesseinrichtung (40) und der Drehzahlregelungseinrichtung (42) eine produktspezifische Anfangsdrehzahl (n(o)) der Zentrifugalpumpe (14) und die Wasserdampf-Temperatur (T1) einstellt und eine Erhöhung der Anfangsdrehzahl (n(o)) vornimmt.

11. Anlage 100) nach Anspruch 10,
**dadurch gekennzeichnet,**
**dass** der behälterbodenseitige, der auslassrohrseitige und der pumpengehäuseseitige Kühlmittelraum (10.4, 12.1, 14.1) getrennt voneinander eine Kühlung (K) erfahren.

12. Anlage (100) nach Anspruch 10,
**dadurch gekennzeichnet,**
**dass** wenigstens zwei Kühlmittelräume (10.4, 12.1, 14.1) miteinander in Reihe geschaltet sind und im Gegenstrom zu einem infusorerhitzten Nahrungsmittelprodukt (P') eine Kühlung (K) erfahren.

## Claims

1. A method for controlling and/or regulating the treatment of heat-sensitive liquid food products (P),
in which steam (D; D1, D2) directly heats the liquid food product (P) to form a germ-free state in an infuser container (10), in which water (W) is removed from the liquid food product (P) by flash evaporation at a lower pressure in a quantity which corresponds to that of the previously supplied steam (D; D1, D2),
in which the liquid food product (P) is transported between the heating and the flash evaporation by means of a centrifugal pump (14),
in which the liquid food product (P) undergoes cooling (K) in at least one section of this flow path by each of the associated walls bordering this flow path beginning with entry into a base region of the infuser container (10) and at most until entering the centrifugal pump (14),
in which the centrifugal pump (14) has an inlet (60), an outlet (62) and a pump housing (14.2) which is formed by at least a housing cover (64) and a housing rear wall (66), and in which pump housing a pump chamber (68) is configured which is in fluidic connection with the inlet (60) and the outlet (62),
in which the centrifugal pump (14) has an impeller wheel (14.3) rotatably accommodated in the pump chamber (68),
which impeller wheel is configured open toward the housing cover (64) and closed toward the housing rear wall (66) by a rear side of the impeller wheel (70), wherein the centrifugal pump (14) is designed such that one part of a volume flow of the liquid food product (P), transported by the impeller wheel (14.3), serves to rinse, as planned, the impeller wheel (14.3) itself and the regions of the pump chamber (68) which are directly adjacent to the impeller wheel (14.3),
in which the centrifugal pump (14) has a front impeller wheel gap (s2) provided between the housing cover (64) and the impeller wheel (14.3), and a rear impeller wheel gap (s1) provided between the housing rear wall (66) and the impeller wheel (14.3),
the front impeller wheel gap (s2) is increased with respect to a minimum front impeller wheel gap (s2*) which ensures the mechanical functioning of the centrifugal pump (14) by reducing the width of the impeller wheel (14.3), the front impeller wheel gap (s2) undergoes a maximum increase at an outer diameter (DL) of the impeller wheel (14.3) which decreases to the minimum front impeller wheel gap (s2*) into the region of the entrance into the blade channels (74) of the impeller wheel (14.3), and
the reduction of the width of the impeller wheel (14.3) at the outer diameter (DL) of the impeller wheel (14.3) is 40 to 50% of the width of a hydraulically optimized impeller wheel,
and in which the following steps (a) to (e) are provided:
(a) a product temperature (T2) of an infuser-heated liquid food product (P'), which is captured downstream after the centrifugal pump (14), is regulated by supplying steam (D; D1, D2) at a steam temperature (T1) to a head region of the infuser container (10) to a product-specific product temperature setpoint (T2(S)) to be attained as planned, wherein a drop in the product temperature (T2) causes a rise, and a rise in the product temperature (T2) causes a drop in the steam temperature (T1);
(b) in an initial phase of the treatment of the liquid food product (P), the centrifugal pump (14) is operated at an initial rotational speed (n(o)) below a rated rotational speed (n(N)) of the centrifugal pump (14) by a predetermined amount, wherein the initial rotational speed (n(o)) is dependent on the liquid food product (P) and/or on the design of the centrifugal pump (14);
(c) a reduction in the volume flow of the centrifugal pump (14) is then counteracted by an increase in the initial rotational speed (n(o)) when said reduction is simultaneously associated with a drop (ΔT2) in the product temperature (T2);
(d) the increase in the initial rotational speed (n(o)) is carried out as a function of the drop (ΔT2) in the product temperature (T2) and/or a rise (ΔT1) of the steam temperature (T1), wherein the respective extent of the increase in the initial rotational speed (n(o)) results from the regulatory necessity of keeping at least the product temperature (T2) constant;
(e) the steps (c) and (d) are repeatedly executed until the planned product temperature setpoint (T2(S)) to be attained and/or the steam temperature (T1) needed to achieve the product temperature setpoint (T2(S)) at the start of treatment is/are fixed again.

2. The method according to Claim 1,
**characterized in that**
the increase in the initial rotational speed (n(o)) is carried out continually.

3. The method according to Claim 2,
**characterized in that**
the gradient of the continual increase in the initial rotational speed (n(o)) results from the regulatory requirements, and is adjusted as a function of the drop in temperature (ΔT2) and/or the rise in temperature (ΔT1), and/or of the product-specific requirements.

4. The method according to Claim 1,
**characterized in that**
the increase in the initial rotational speed (n(o)) is conducted in at least one discrete step with a rotational speed differential (Δn) which results from the regulatory requirements.

5. The method according to Claim 4,
**characterized in that**
the rotational speed differential (Δn) is adjusted as a function of the drop in temperature (ΔT2) and/or the rise in temperature (ΔT1), and/or of the product-specific requirements.

6. The method according to one of the preceding claims,
**characterized in that**
the initial rotational speed (n(o)) and/or the product temperature setpoint (T2(S)) is/are adjusted as a function of default parameters which are characteristic of the liquid food product (P), wherein the default parameters are understood to be the physical variables such as density, viscosity and thermal conductivity of the liquid food product (P), and/or its composition such as the fat content and protein content.

7. The method according to one of the preceding claims,
**characterized in that**
the initial rotational speed (n(o)) and/or the product temperature setpoint (T2(S)) is/are adjusted as a function of the physical boundary conditions to which the method is subjected, wherein the physical boundary conditions of the method are understood to be process-related default parameters of the method such as pressure and temperature.

8. The method according to one of Claims 2 to 7,
**characterized in that**
the initial rotational speed (n(o)) and/or the product temperature setpoint (T2(S)) and/or the rotational speed differential (Δn) and/or, alternatively to the rotational speed differential (Δn), the gradient of the continual increase in the initial rotational speed (n(o)) is/are adjusted by means of a calibration function created and saved before or while starting the method.

9. The method according to one of the preceding claims,
**characterized in that**
the liquid food product (P) is supplied annularly, and the liquid food product is impinged on from the inside by internal steam (D2), and from the outside by external steam (D1),
and the supply of the external steam (D1) into the head region of the infuser container (10) is adjusted as a function of a required supply pressure for the internal steam (D2), and by differential pressure regulation.

10. A system (100) for controlling and/or regulating the treatment of heat-sensitive liquid food products (P), comprising an infuser container (10) into the headspace of which a steam line (24.1) for steam (D; D2) and a product inlet (20) discharge, comprising a vacuum chamber (16) in fluidic connection with the infuser container (10) via a connecting line (30), comprising a centrifugal pump (14) arranged in the connecting line (30), comprising an outlet opening (10.3) arranged in a bottom (10.2) of the infuser container (10), comprising an outlet pipe (12) connecting to the outlet opening (10.3) and discharging into the centrifugal pump (14),
• comprising a container bottom-side coolant chamber (10.4) and furthermore
• comprising a pump housing-side coolant chamber (14.1)
• and/or comprising an outlet pipe-side coolant chamber (12.1),
**characterized in that**
• the centrifugal pump (14) has an inlet (60), an outlet (62) and a pump housing (14.2) which is formed by at least a housing cover (64) and a housing rear wall (66), and in which pump housing a pump chamber (68) is configured which is in fluidic connection with the inlet (60) and the outlet (62),
• the centrifugal pump (14) has an impeller wheel (14.3) rotatably accommodated in the pump chamber (68), which is configured open toward the housing cover (64) and closed toward the housing rear wall (66) by a rear side of the impeller wheel (70), wherein the centrifugal pump (14) is designed such that one part of a volume flow of the liquid food product (P), transported by the impeller wheel (14.3), serves to rinse, as planned, the impeller wheel (14.3) itself and the regions of the pump chamber (68) which are directly adjacent to the impeller wheel (14.3),
• the centrifugal pump (14) has a front impeller wheel gap (s2) provided between the housing cover (64) and the impeller wheel (14.3), and a rear impeller wheel gap (s1) provided between the housing rear wall (66) and the impeller wheel (14.3),
the front impeller wheel gap (s2) is increased with respect to a minimum front impeller wheel gap (s2*) which ensures the mechanical functioning of the centrifugal pump (14) by reducing the width of the impeller wheel (14.3),
• the front impeller wheel gap (s2) undergoes a maximum increase at an outer diameter (DL) of the impeller wheel (14.3) which decreases to the minimum front impeller wheel gap (s2*) into the region of the entrance into the blade channels (74) of the impeller wheel (14.3), and
• the reduction of the width of the impeller wheel (14.3) at the outer diameter (DL) of the impeller wheel (14.3) is 40 to 50% of the width of a hydraulically optimized impeller wheel,
• downstream directly after the centrifugal pump (14), a temperature regulating apparatus (44) is provided in the connecting line (30), which is adapted for regulating a product temperature (T2) and which interacts with a regulating valve (46) arranged in the steam line (24.1),
• downstream after the regulating valve (46), a temperature measuring apparatus (40) is provided in the steam line (24.1) for a steam temperature (T1),
• the centrifugal pump (14) is assigned a rotational speed regulating apparatus (42) for regulating a rotational speed (n) of the centrifugal pump (14),
• and a control and regulating apparatus (50) is provided, which adjusts a product-specific initial rotational speed (n(o)) of the centrifugal pump (14) and the steam temperature (T1), and executes an increase in the initial rotational speed (n(o)), by interacting with the temperature regulating apparatus (44), the regulating valve (46), the temperature measuring apparatus (40) and the rotational speed regulating apparatus (42).

11. The system (100) according to Claim 10,
**characterized in that**
the container-bottom-side, the outlet pipe-side and the pump housing-side coolant chambers (10.4,12.1,14.1) undergo cooling (K) separately from one another.

12. The system (100) according to Claim 10,
**characterized in that**
at least two coolant chambers (10.4,12.1,14.1) are series-connected with one another and undergo cooling (K) in the countercurrent to an infuser-heated food product (P').

## Revendications

1. Procédé pour la commande et/ou la régulation du traitement de produits alimentaires liquides (P) sensibles à la chaleur,
dans lequel de la vapeur d'eau (D ; D1, D2) chauffe directement le produit alimentaire liquide (P) pour la formation d'un état exempt de germes dans un récipient d'infusion (10),
dans lequel de l'eau (W) est extraite du produit alimentaire liquide (P) par détente à une pression inférieure, dans une quantité qui correspond à celle de la vapeur d'eau amenée précédemment (D ; D1, D2),
dans lequel le produit alimentaire liquide (P) est transporté au moyen d'une pompe centrifuge (14) entre le chauffage et la détente,
dans lequel, dans au moins une section de cette voie d'écoulement, le produit alimentaire liquide (P) subit un refroidissement (K) par les parois respectivement attribuées bordant cette voie d'écoulement, en partant de l'entrée dans une zone de pied du récipient d'infusion (10) et au maximum jusque dans la pompe centrifuge (14),
dans lequel la pompe centrifuge (14) présente une admission (60), une sortie (62) et un boîtier de pompe (14.2), lequel est formé d'au moins un couvercle de boîtier (64) et d'une paroi arrière de boîtier (66) et dans lequel une chambre de pompe (68) se trouvant en liaison fluidique avec l'admission (60) et avec la sortie (62) est formée,
dans lequel la pompe centrifuge (14) présente une roue (14.3) supportée en rotation dans la chambre de pompe (68),
laquelle est formée vers le couvercle de boîtier (64) de façon ouverte et vers la paroi arrière de boîtier (66) de façon fermée par un côté arrière de roue (70), la pompe centrifuge (14) étant conçue de telle sorte qu'une partie d'un débit volumique du produit alimentaire liquide (P) transporté par la roue (14.3) sert à des rinçages planifiés de la roue (14.3) elle-même et des zones de la chambre de pompe (68) immédiatement adjacentes à la roue (14.3),
dans lequel la pompe centrifuge (14) présente un écart de roue avant (s2) prévu entre le couvercle de boîtier (64) et la roue (14.3) et un écart de roue arrière (s1) prévu entre la paroi arrière de boîtier (66) et la roue (14.3),
l'écart de roue avant (s2) étant agrandi par réduction de la largeur de la roue (14.3) par rapport à un écart de roue avant minimal (s2*), lequel assure la fonctionnalité mécanique de la pompe centrifuge (14),
l'écart de roue avant (s2) subissant un agrandissement maximal au niveau d'un diamètre extérieur (DL) de la roue (14.3), lequel agrandissement diminue jusqu'à l'écart de roue avant minimal (s2*), jusqu'à la zone de l'entrée dans les canaux d'aubes (74) de la roue (14.3), et
la réduction de la largeur de la roue (14.3) au niveau du diamètre extérieur (DL) de la roue (14.3) s'élevant à 40 à 50 % de la largeur d'une roue optimisée hydrauliquement,
et dans lequel les étapes suivantes (a) à (e) sont prévues :
(a) une température de produit (T2) d'un produit alimentaire liquide (P') chauffé par infuseur, saisie en aval derrière la pompe centrifuge (14), est réglée sur une valeur prescrite de température de produit spécifique au produit et devant être obtenue de façon planifiée (T2(S)) par amenée de vapeur d'eau (D ; D1, D2) avec une température de vapeur d'eau (T1) dans une zone de tête du récipient d'infusion (10), une baisse de la température de produit (T2) entraînant une augmentation et une augmentation de la température de produit (T2) entraînant une baisse de la température de vapeur d'eau (T1) ;
(b) dans une phase initiale du traitement du produit alimentaire liquide (P), la pompe centrifuge (14) est entraînée à une vitesse initiale (n(o)) étant inférieure à une vitesse nominale (n(N)) de la pompe centrifuge (14) par une valeur prédéterminée, la vitesse initiale (n(o)) dépendant du produit alimentaire liquide (P) et/ou de la conception de la pompe centrifuge (14) ;
(c) une réduction du débit volumique de la pompe centrifuge (14) est contrecarrée par une augmentation de la vitesse initiale (n(o)) lorsque cette réduction s'accompagne simultanément d'une baisse de température (ΔT2) de la température de produit (T2) ;
(d) l'augmentation de la vitesse initiale (n(o)) est effectuée en fonction de la baisse de température (ΔT2) de la température de produit (T2) et/ou d'une augmentation de température (ΔT1) de la température de vapeur d'eau (T1), la quantité respective de l'augmentation de la vitesse initiale (n(o)) résultant de la nécessité, relevant de la technique de régulation, de maintenir au moins la température de produit (T2) constante ;
(e) les étapes c) et d) sont exécutées de façon répétée jusqu'à ce que la valeur prescrite de température de produit (T2(S)) devant être obtenue de façon planifiée et/ou la température de vapeur d'eau (T1) requise au début du traitement pour atteindre la valeur prescrite de température de produit (T2(S)) soient de nouveau réglées de manière stationnaire.

2. Procédé selon la revendication 1,
**caractérisé en ce que**
l'augmentation de la vitesse initiale (no)) est effectuée de façon continue.

3. Procédé selon la revendication 2,
**caractérisé en ce que**
le gradient de l'augmentation continue de la vitesse initiale (n(o)) résulte des exigences relevant de la technique de régulation et est réglé en fonction de la baisse de température (ΔT2) et/ou de l'augmentation de température (ΔT1) et/ou des exigences spécifiques au produit.

4. Procédé selon la revendication 1,
**caractérisé en ce que**
l'augmentation de la vitesse initiale (n(o)) est effectuée en au moins une étape discrète avec une différence de vitesse (Δn) résultant des exigences relevant de la technique de régulation.

5. Procédé selon la revendication 4,
**caractérisé en ce que**
la différence de vitesse (Δn) est réglée en fonction de la baisse de température (ΔT2) et/ou de l'augmentation de température (ΔT1) et/ou des exigences spécifiques au produit.

6. Procédé selon l'une des revendications précédentes,
**caractérisé en ce que**
la vitesse initiale (n(o)) et/ou la valeur prescrite de température de produit (T2(S)) sont réglées en fonction de paramètres par défaut, lesquels sont caractéristiques du produit alimentaire liquide (P), les paramètres par défaut étant compris comme étant les grandeurs physiques telles que la densité, la viscosité et la diffusivité thermique du produit alimentaire liquide (P) et/ou de sa composition, telle que la proportion de matières grasses et de protéines.

7. Procédé selon l'une des revendications précédentes,
**caractérisé en ce que**
la vitesse initiale (n(o)) et/ou la valeur prescrite de température de produit (T2(S)) sont réglées en fonction des conditions marginales physiques auxquelles le procédé est soumis, les conditions marginales physiques du procédé étant comprises comme étant des paramètres par défaut relatifs au procédé, tels que la pression et la température.

8. Procédé selon l'une des revendications 2 à 7,
**caractérisé en ce que**
la vitesse initiale (n(o)) et/ou la valeur prescrite de température de produit (T2(S)) et/ou la différence de vitesse (Δn) et/ou, alternativement à la différence de vitesse (Δn), le gradient de l'augmentation continue de la vitesse initiale (n(o)) sont réglés au moyen d'une fonction d'étalonnage produite et enregistrée avant ou lors de la mise en service du procédé.

9. Procédé selon l'une des revendications précédentes,
**caractérisé en ce que**
le produit alimentaire liquide (P) est amené en anneau et soumis à l'intérieur à une vapeur d'eau intérieure (D2) et à l'extérieur à une vapeur d'eau extérieure (D1), et
**en ce que** l'amenée de la vapeur d'eau extérieure (D1) est réglée en fonction d'une pression d'amenée de la vapeur d'eau intérieure (D2) requise dans la zone de tête du récipient d'infusion (10) et par une régulation de pression différentielle.

10. Installation (100) pour la commande et/ou la régulation du traitement de produits alimentaires liquides (P) sensibles à la chaleur, comprenant un récipient d'infusion (10) dans l'espace libre duquel une conduite de vapeur (24.1) pour une vapeur d'eau (D ; D2) et une admission de produit (20) débouchent, comprenant une chambre à vide (16) se trouvant en liaison fluidique avec le récipient d'infusion (10) par une conduite de raccordement (30), comprenant une pompe centrifuge (14) disposée dans la conduite de raccordement (30), comprenant une ouverture de sortie (10.3) disposée dans un fond de récipient (10.2) du récipient d'infusion (10), comprenant un tuyau de sortie (12) raccordé à l'ouverture de sortie (10.3) et débouchant dans la pompe centrifuge (14),
• comprenant une chambre de fluide de refroidissement (10.4) du côté du fond de réservoir et, en outre,
• comprenant une chambre de fluide de refroidissement (14.1) du côté du boîtier de pompe
• et/ou comprenant une chambre de fluide de refroidissement (12.1) du côté du tuyau de sortie,
**caractérisée en ce que**
• la pompe centrifuge (14) présente une admission (60), une sortie (62) et un boîtier de pompe (14.2), lequel est formé d'au moins un couvercle de boîtier (64) et d'une paroi arrière de boîtier (66) et dans lequel une chambre de pompe (68) se trouvant en liaison fluidique avec l'admission (60) et avec la sortie (62) est formée,
• **en ce que** la pompe centrifuge (14) présente une roue (14.3) supportée en rotation dans une chambre de pompe (68), laquelle roue est formée vers le couvercle de boîtier (64) de façon ouverte et vers la paroi arrière de boîtier (66) de façon fermée par un côté arrière de roue (70), la pompe centrifuge (14) étant conçue de telle sorte qu'une partie d'un débit volumique du produit alimentaire liquide (P) transporté par la roue (14.3) sert à des rinçages planifiés de la roue (14.3) elle-même et des zones de la chambre de pompe (68) immédiatement adjacentes à la roue (14.3),
• **en ce que** la pompe centrifuge (14) présente un écart de roue avant (s2) prévu entre le couvercle de boîtier (64) et la roue (14.3) et un écart de roue arrière (s1) prévu entre la paroi arrière de boîtier (66) et la roue (14.3),
l'écart de roue avant (s2) étant agrandi par réduction de la largeur de la roue (14.3) par rapport à un écart de roue avant minimal (s2*), lequel assure la fonctionnalité mécanique de la pompe centrifuge (14),
• **en ce que** l'écart de roue avant (s2) subit un agrandissement maximal au niveau d'un diamètre extérieur (DL) de la roue (14.3), lequel agrandissement diminue jusqu'à l'écart de roue avant minimal (s2*), jusqu'à la zone de l'entrée dans les canaux d'aubes (74) de la roue (14.3), et
• **en ce que** la réduction de la largeur de la roue (14.3) au niveau du diamètre extérieur (DL) de la roue (14.3) s'élève à 40 à 50 % de la largeur d'une roue optimisée hydrauliquement,
• **en ce que**, dans la conduite de raccordement (30), immédiatement en aval derrière la pompe centrifuge (14), un dispositif de régulation de température (44) installé pour la régulation de la température de produit (T2) est prévu, lequel interagit avec une soupape de régulation (46) disposée dans la conduite de vapeur (24.1),
• **en ce que**, dans la conduite de vapeur (24.1), en aval derrière la soupape de régulation (46), un dispositif de mesure de température (40) pour une température de vapeur d'eau (T1) est prévu,
• **en ce qu'**un dispositif de régulation de vitesse (42) est attribué à la pompe centrifuge (14) pour la régulation d'une vitesse (n) de la pompe centrifuge (14)
• et **en ce qu'**un dispositif de commande et de régulation (50) est prévu, lequel, en interaction avec le dispositif de régulation de température (44), avec la soupape de régulation (46), avec le dispositif de mesure de température (40) et avec le dispositif de régulation de vitesse (42), règle une vitesse initiale (n(o)) spécifique au produit de la pompe centrifuge (14) et la température de vapeur d'eau (T1) et effectue une augmentation de la vitesse initiale (n(o)).

11. Installation (100) selon la revendication 10,
**caractérisée en ce que**
les chambres de fluide de refroidissement du côté du fond de réservoir, du côté du tuyau de sortie et du côté du boîtier de pompe (10.4, 12.1, 14.1) sont soumises à un refroidissement (K) séparément les unes des autres.

12. Installation (100) selon la revendication 10,
**caractérisée en ce qu'**
au moins deux chambres de refroidissement (10.4, 12.1, 14.1) sont reliées en série les unes aux autres et sont soumises à un refroidissement (K) à contrecourant d'un produit alimentaire (P') chauffé par infuseur.
